# EUROPÄISCHE PATENTSCHRIFT

(11) **EP 1 101 768 B1**
(45) Veröffentlichungstag und Bekanntmachung des Hinweises auf die Patenterteilung: **02.10.2002**
(21) Anmeldenummer: 00124502.6
(22) Anmeldetag: 09.11.2000
(51) Int. Cl.: C07F 9/50

(54) **Substituierte Phosphinophenolat-Metall-Komplexe zur Polymerisation von Olefinen**
Substituted Phosphanylphenolato[P,O]-metal-complexes for Polymerisation of Olefines
Complexes métalliques de phosphinophénolates pour la polymèrisation d' olefines

(30) Priorität: 17.11.1999 DE 19955454
(43) Veröffentlichungstag der Anmeldung: 23.05.2001
(73) Patentinhaber: BASF AKTIENGESELLSCHAFT, 67056 Ludwigshafen (DE)
(72) Erfinder: Kristen, Marc Oliver, Dr., 67117 Limburgerhof (DE); Heinicke, Joachim, Prof. Dr., 17498 Wackerow (DE); Keim, Wilhelm, Prof. Dr., 52074 Aachen (DE); Koehler, Martin, 17489 Greifswald (DE); He, Mengzhen, Dr., 64287 Darmstadt (DE)

(56) Entgegenhaltungen:
- US-A- 4 503 279
- HEINICKE, JOACHIM ET AL: "Methyl(2-phosphanylphenolato[P,O])nickel( II) complexes - synthesis, structure, and activity as ethene oligomerization catalysts" EUR.J.INORG.CHEM. (2000), (3), 431-440, XP000973107
- HEINICKE J ET AL: "o-Hydroxyarylphosphines and diphosphines: metallation-rearrangement versus P-O reduction of o-halogenoaryloxyphosphines by sodium" JOURNAL OF ORGANOMETALLIC CHEMISTRY,CH,ELSEVIER-SEQUOIA S.A. LAUSANNE, Bd. 520, Nr. 1, 9. August 1996 (1996-08-09), Seiten 131-137, XP004036467 ISSN: 0022-328X
- HEINICKE, JOACHIM ET AL: "O-Phosphinophenols - synthesis and reactivity" PHOSPHORUS, SULFUR SILICON RELAT. ELEM. (1996), 109-110(1-4, PROCEEDINGS OF THE THIRTEENTH INTERNATIONAL CONFERENCE ON PHOSPHORUS CHEMISTRY, 1995), 501-504 , XP000973096
- FOX, MARYE ANNE ET AL: "Synthesis and electrochemical activity of nickel phosphine complexes and polymers bound to electrode surfaces" MACROMOLECULES (1991), 24(16), 4626-36 , XP000973114

## Beschreibung

Die Erfindung betrifft neue Phosphinophenolat-Metall-Komplexe zur Polymerisation von 1-Olefinen. Weiterhin betrifft die Erfindung Katalysatoren, enthaltend die neuen Phosphinophenolat-Metall-Komplexe, ein Verfahren zur Polymerisation von 1-Olefinen mit Hilfe der neuen Komplexe sowie die danach erhältlichen Polymerisate und Formmassen.

Die Metallkomplexe sind erhältlich aus einer Metall-Vorstufe eines Metalls der 6.-10. Gruppe des Periodensystems in der Oxidationsstufe 0 oder +2 und einem Ligand der allgemeinen Formel I, 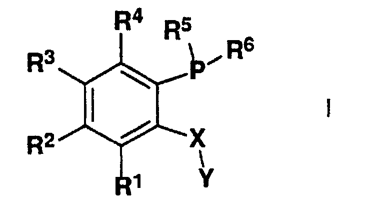 wobei
- R¹, R² und R⁴: unabhängig voneinander bedeuten:
Wasserstoff,
C₁-C₁₂-Alkyl,
C₁-C₁₂-Alkyl, ein- oder mehrfach gleich oder verschieden substituiert durch C₁-C₁₂-Alkylgruppen, Halogene, C₁-C₁₂-Alkoxygruppen oder C₁-C₁₂-Thioethergruppen,
C₇-C₂₀-Arylalkyl,
C₂- bis C₁₂-Alkenyl,
C₃-C₁₂-Cycloalkyl,
C₃-C₁₂-Cycloalkyl, ein- oder mehrfach gleich oder verschieden substituiert durch C₁-C₁₂-Alkylgruppen, Halogene, C₁-C₁₂-Alkoxygruppen oder C₁-C₁₂-Thioethergruppen,
C₆-C₁₄-Aryl,
C₆-C₁₄-Aryl, gleich oder verschieden substituiert durch eine oder mehrere C₁-C₁₂-Alkylgruppen, Halogene, ein- oder mehrfach halogenierte C₁-C₁₂-Alkylgruppen, C₁-C₁₂-Alkoxygruppen, Silyloxygruppen OSiR⁷R⁸R⁹, Aminogruppen NR¹⁰R¹¹ oder C₁-C₁₂-Thioethergruppen,
C₁-C₁₂-Alkoxygruppen,
C₆-C₁₄-Aryloxygruppen,
C₁-C₁₂-Thioethergruppen,
Silyloxygruppen OSiR⁷R⁸ R⁹,
Halogene
oder Aminogruppen NR¹⁰R¹¹;
- R³: ausgewählt wird aus den folgenden Gruppen:
in α-Stellung verzweigte C₃-C₁₂-Alkylgruppen, C₁-C₁₂-Alkyl, in α-Stellung ein- oder mehrfach gleich oder verschieden substituiert durch C₁-C₁₂-Alkylgruppen, Halogene, C₁-C₁₂-Alkoxygruppen oder C₁-C₁₂-Thioethergruppen,
C₇-C₂₀-Arylalkyl,
C₂-C₁₀-Alkenyl,
C₃-C₁₀-Alkenylalkyl mit mindestens einer Doppelbindung, wobei mindestens eine C-C-Doppelbindung in Konjugation zum Aromaten steht,
C₃-C₁₂-Cycloalkyl,
C₆-C₁₄-Aryl,
C₆-C₁₄-Aryl, gleich oder verschieden substituiert durch eine oder mehrere C₁-C₁₂-Alkylgruppen, Halogene, ein- oder mehrfach halogenierte C₁-C₁₂-Alkylgruppen, C₁-C₁₂-Alkoxygruppen, Silyloxygruppen OSiR⁷R⁸R⁹, Aminogruppen NR¹⁰R¹¹ oder C₁-C₁₂-Thioethergruppen,
C₁-C₁₂-Alkoxygruppen,
C₆-C₁₄-Aryloxygruppen,
C₁-C₁₂-Thioethergruppen,
Silyloxygruppen OSiR⁷R⁸ R⁹,
Halogene
oder Aminogruppen NR¹⁰R¹¹,
wobei jeweils benachbarte Reste R¹ bis R⁴ miteinander einen 5- bis 8-gliedrigen Ring bilden können;
- R⁵ und R⁶: unabhängig voneinander ausgewählt werden aus, in α-Stellung verzweigte C₃-C₁₂-Alkylgruppen, C₃-C₁₂-Cycloalkylgruppen,
C₃-C₁₂-Cycloalkylgruppen, gleich oder verschieden substituiert durch eine oder mehrere C₁-C₁₂-Alkylgruppen, Halogen, ein- oder mehrfach halogenierte C₁-C₁₂-Alkylgruppen, C₁-C₁₂-Alkoxygruppen, Silyloxygruppen OSiR⁷R⁸R⁹, Aminogruppen NR¹⁰R¹¹ oder C₁-C₁₂-Thioethergruppen,
- X: Sauerstoff, Schwefel, Selen, N-R¹², P-R¹² oder AsR¹² bedeutet,
- Y: für Wasserstoff steht oder
Alkalimetallkationen,
C₁-C₁₈-Alkylacylanionen,
C₆-C₁₄-Arylacylanionen oder
SiR⁷R⁸R⁹,
- R⁷ bis R¹²: unabhängig voneinander aus Wasserstoff, verzweigten oder unverzweigten C₁-C₆-Alkylgruppen, Benzylresten und C₆-C₁₄-Arylgruppen ausgewählt werden, wobei jeweils zwei benachbarte Reste R⁷ und R⁸ oder R¹⁰ und R¹¹ miteinander einen gesättigten oder ungesättigten 5 bis 8-gliedrigen Ring bilden können.

Polyolefine sind als Werkstoffe von allgemeiner Bedeutung, beispielsweise zur Herstellung von Folien oder Platten, Fasern oder Hohlkörpern wie beispielsweise Flaschen.

Neue verbesserte Verfahren zur Herstellung von Polyolefinen sind daher von großer wirtschaftlicher Bedeutung. Besonders wichtig ist dabei die Art der verwendeten Katalysatoren.

Herkömmliche Verfahren und Katalysatoren wie Ziegler-Natta-Katalysatoren (z.B. A. Echte, Lehrbuch der technischen Polymerchemie, VCH, Weinheim, New York, Basel, Cambridge, Tokio; 1993; S. 301-3) und Metallocene (z.B. DE-A 30 07 725) haben vielfach den Nachteil, dass zu ihrer Aktivierung Aluminiumalkyle verwendet werden. Diese sind extrem empfindlich gegen Feuchtigkeit und gegen Lewis-Basen, so dass die Aktivität der Katalysatoren durch eventuell verunreinigte Monomere stark gesenkt wird. Außerdem sind einige Aluminiumalkyle feuergefährlich.

Auch die in WO 96/23010 vorgestellten Nickelkomplexe müssen mit Aluminiumalkylen oder Lewissäuren auf Boran-Basis aktiviert werden.

US 4,472,522 und US 4,472,525 offenbaren Nickelkomplexe der Struktur A, 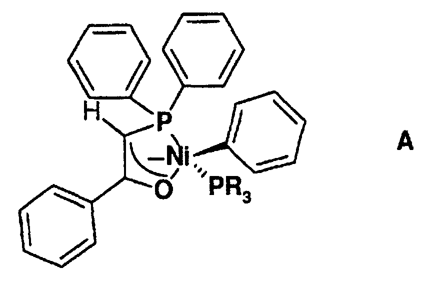 die sich ohne Aluminiumalkyl aktivieren lassen. Diese eignen sich zur Oligomerisation von Ethylen zu 1-Olefinen (SHOP-Prozess). Diese Verbindung wurde auf verschiedene Arten derivatisiert. Trotz Variation der Reste R (siehe W. Keim et al., Organometallics 1986, 5, 2356-9) gelang es nicht, geeignete Werkstoffe zu erzeugen, denn die erhaltenen Molmassen sind zu gering.

Weiterhin wird in US 4,472,525 ein Katalysatorsystem aus ortho-Diethylphosphinophenol A' oder ortho-Diphenylphosphinophenol A" offenbart, 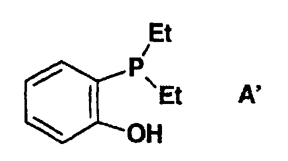 das nach Umsetzung mit Ni(COD)₂ *in situ* mit Ethylen lineare Oligmeren erzeugt, aber keine für polymere Werkstoffe verwertbare Polymerisate.

Braunstein *et al*. versuchten, die Ausbeute und Struktur durch Änderung der Elektronendichte am Chelat-Phosphor zu beeinflussen. Sie verwendeten das ortho-Phosphinophenolderivat B 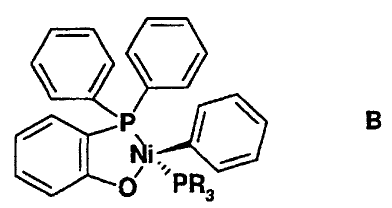 (J. Pietsch, P. Braunstein, Y. Chauvin, New J. Chem. 1998, 467). Die Produkte der Umsetzung von Ethylen und Verbindung B waren ebenfalls lineare 1-Olefine mit einem mittleren Oligomerisationsgrad von 40.

In US 3,635,937 wurden ausgewählte Ni-Komplexe offengelegt, beispielsweise B', 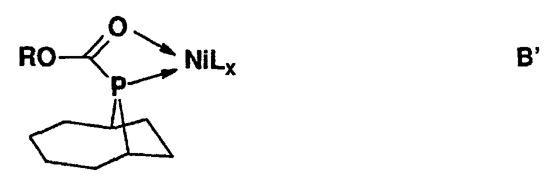 bei denen R = Methyl oder Ethyl und Lₓ ein 1,5-Cyclooctadien sein kann, die ohne Aktivierung durch Aluminiumalkyl Ethylen zu Polyethylen zu polymerisieren vermögen. Die Molekulargewichte M_{w} sind mit etwa 95.000 bis 162.000 g sehr attraktiv, jedoch sind die Aktivitäten mit 0,73 kg PE/mol Ni·h (Beispiel II) für technische Anwendungen zu gering.

In DE-A 33 36 500 und DE-A 34 45 090 wurden Ni-Katalysatoren offengelegt, die sich in situ aus einem tertiären Phosphan, einer chinoiden Verbindung und einer Ni(0)-Verbindung bzw. einer leicht zu einer Ni(0)-Verbindung reduzierbaren Vorstufe erhalten lassen. Zwar polymerisieren sie Ethylen zu Polyethylen; zu ihrer Herstellung sind als Vorstufen jedoch sehr luft- und feuchtigkeitsempfindliche Wittig-Reagenzien erforderlich, was unvorteilhaft für technische Anwendungen ist.

In seiner Dissertation zeigte U. Jux (U. Jux, *Dissertation* Universität Greifswald, 1996), dass es möglich ist, mit Ni-Komplexen der Verbindungen C, C' und C" ohne vorherige Aktivierung durch Aluminiumalkyl Polyethylen herzustellen.

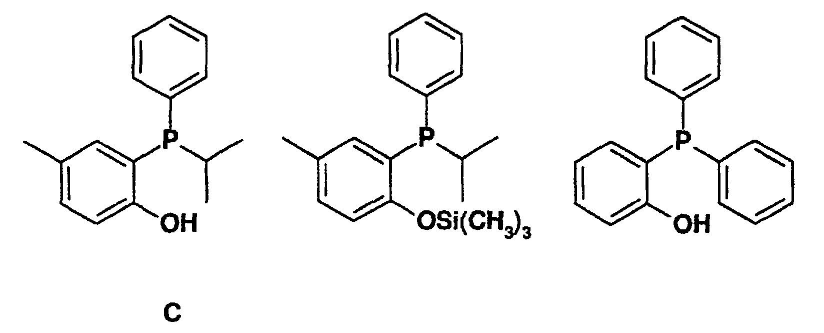

Die Aktivitäten waren jedoch mit 1,4 kg PE/mol Ni·h (Verbindung C) bzw. 1,4 kg PE/mol Ni·h (Verbindung C') bzw. 2,1 kg PE/mol Ni·h (Verbindung C") für technische Anwendungen immer noch zu gering.

Auf der GDCh-Tagung in München (16.-21.08.1998, s. Tagungsband, Poster B197) wurden weitere Ni-Komplexe offengelegt, die ebenfalls in der Lage sind, ohne vorherige Aktivierung durch Aluminiumalkyl Ethylen zu polymerisieren. Liganden der Formel D, D' und D" wurden getestet.

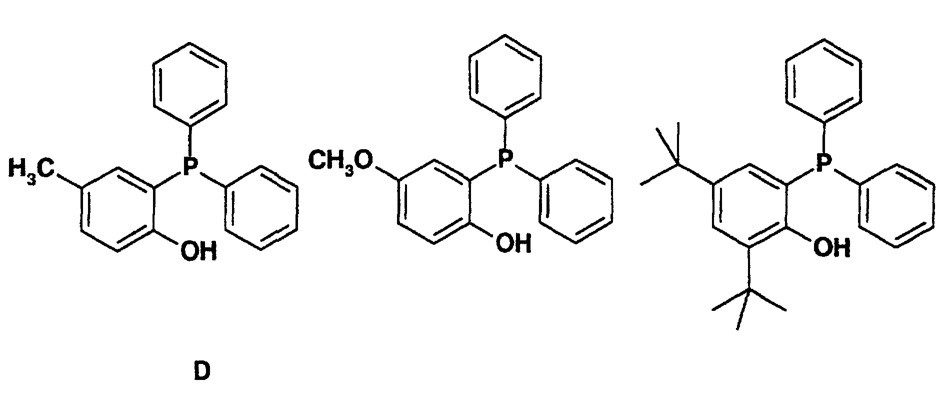

Sie haben gemeinsam, dass es sich um Triarylphosphanophenole handelt. Die erhaltenen Polymere hatten jedoch Molmassen von unter 10000 g, was für Werkstoffe zu gering ist. Ni-Komplexe der Diarylmonoalkylphosphanophenole D"' und D"" 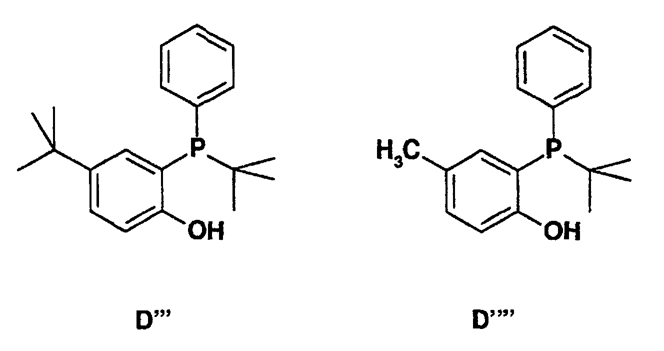 waren ebenfalls gegenüber Ehylen polymeriationsaktiv, jedoch waren die Molmassen immer noch unter 10.000 g und damit für Werkstoffanwendungen zu gering.

Schließlich wurden sekundäre Phosphinophenol-Liganden (R⁶ in Formel I = H) auf der genannten GDCh-Tagung offengelegt, die mit Ni(COD)₂ umgesetzt wurden und hochmolekulares Polyethylen erzeugten. Es zeigte sich jedoch, dass die sekundären Phosphinophenole extrem empfindlich gegenüber geringsten Spuren von Luftsauerstoff waren. Eigene Experimente mit diesen Komplexsystemen waren nicht gut reproduzierbar, mehrere Versuche unter anscheinend identischen Bedingungen lieferten überhaupt kein Polymer. In großtechnischen Anlagen ist man jedoch an möglichst robusten Katalysatorsystemen interessiert.

Es bestand deshalb die Aufgabe, ein Komplexsystem bereitzustellen, welches
- ohne Aktivierung durch Aluminiumalkyle in der Lage ist, mit hohen Aktivitäten
   1-Olefine zu polymerisieren;
- so stabil gegenüber Luftsauerstoff ist, dass es reproduzierbare Ergebnisse liefert und somit in technischen Anlagen einsetzbar ist, und weiterhin
- Polyolefine liefert, deren Molmassen hoch genug sind, dass sie zur Herstellung von Folien, Platten, Fasern oder Hohlkörpern geeignet sind.

Es wurde nun gefunden, dass die eingangs beschriebenen Metallkomplexe, erhältlich aus einer Metall-Vorstufe eines Metalls der 6.-10. Gruppe des Periodensystems in der Oxidationsstufe 0 oder +2 und einem Ligand der allgemeinen Formel I, geeignet sind, 1-Olefine zu polymeren Werkstoffen zu polymerisieren. Dabei kommt es entscheidend auf die Wahl der Substituenten am Liganden an.

In den Metall-Vorstufen werden Metalle M der 6.-10. Gruppe des Periodensystems der Elemente verwendet, wie Chrom, Mangan, Eisen, Kobalt, Nickel und Palladium. Bevorzugt sind Eisen, Kobalt, Nickel und Palladium, besonders bevorzugt ist Nickel. Diese Metalle liegen in der Oxidationsstufe 0 oder auch + 2 vor. Diese Metalle werden durch Liganden stabilisiert.

Als Liganden der Metall-Vorstufen dienen die gebräuchlichen in der Komplexchemie verwendeten Neutralmoleküle (vgl. Elschenbroich/Salzer, "Einführung in die Organometallchemie", 3. Auflage, B.G. Teubner Verlag, Stuttgart 1990). Bevorzugt sind aliphatische und aromatische Phosphane RₓPH₃₋ₓ und Amine RₓNH₃₋ₓ mit x = 0,1,2,3, wobei R aus der Gruppe der unter R¹ näher definierten Reste (s.u.) ausgewählt wird. Aber auch CO, C₁-C₁₂-Alkylnitrile oder C₆-C₁₄-Arylnitrile sind geeignet, wie Acetonitril, Propionitril, Butyronitril oder Benzonitril. Weiterhin können einfach oder mehrfach ethylenisch ungesättigte Doppelbindungssysteme als Ligand dienen, wie Ethenyl, Propenyl, cis-2-Butenyl, trans-2-Butenyl, Cyclohexenyl, Norbornenyl, 1,5-Cyclooctadienyl-Liganden ("COD"), 1,6-Cyclodecenyl-Liganden, 1,5,9-all-trans-Cyclododecatrienyl-Liganden, Triphenylphosphan-Liganden sowie Norbornadienylliganden.

Außerdem sind anionische Liganden geeignet, wie beispielsweise Halogenidionen wie Fluorid, Chlorid, Bromid oder Iodid; Alkylanionen wie (CH₃)⁻, (C₂H₅)⁻, (C₃H₇)⁻, (n-C₄H₉)⁻, (tert.-C₄H₉)⁻ oder (C₆H₁₄)⁻, Allylanionen und Benzylanionen sowie Arylanionen wie das Phenylanion.

Besonders bevorzugt sind als Liganden Ethen-Liganden, 1,5-Cyclooctadienyl-Liganden ("COD"), 1,6-Cyclodecenyl-Liganden, 1,5,9-all-trans-Cyclododecatrienyl-Liganden, Triphenylphosphan-Liganden sowie Norbornadienylliganden. Als korrespondierende Metall-Vorstufe dient in diesen bevorzugten Fällen Ni(C₂H₄)₃, Ni(COD)₂, Ni(1,6-Cyclodecadien)₂, Ni(1,5,9-*all*-*trans*-Cyclododecatrien)₂, Pd(Norbornadien)Cl₂ sowie Ni[P(C₆H₅)₃]₄ und Pd[P(C₆H₅)₃]₄.

Ganz besonders bevorzugt ist Ni(COD)₂.

Wenn die Metalle M in der Oxidationsstufe +2 vorliegen, so muss ein Reduktionsmittel zugegeben werden, um die Oxidationsstufe 0 *in situ* zu erzeugen. Als Reduktionsmittel sind die in der organischen und metallorganischen Chemie gebräuchlichen Verbindungen geeignet. Bevorzugte Reduktionsmittel sind NaH, KH, komplexe Hydride wie LiAlH₄, LiBH₄, NaBH₄, Na(CN)BH₃, (iso-Butyl)₂AlH, Alkalimetalle wie Na, K oder auch Na/K-Legierung und H₂. Besonders bevorzugt ist NaH.

Die Reste R¹, R² und R⁴ sind unabhängig voneinander:
- Wasserstoff,
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl 2,2,4,4-Tetramethylcyclopentyl, 2-Methylcyclohexyl, 3-Methylcyclohexyl, 4-Methylcyclohexyl, cis-2,5-Dimethylcyclohexyl, trans-2,5-Dimethylcyclohexyl, 2,2,5,5-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,5,5-Tetrachlorcyclohexyl, 2-Thiomethylcyclopentyl, 2-Thiomethylcyclohexyl, 3-Thiomethyl-cyclopentyl, 3-Thiomethylcyclohexyl und weitere Derivate;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl,
- C₂- bis C₁₂-Alkenyl, bevorzugt C₂- bis C₆-Alkenyl wie Vinyl, 1-Propenyl, iso-Propenyl, 1-Butenyl, iso-Butenyl, sec.-Butenyl, Buta-1,3-dienyl, n-Pent-1-enyl, iso-Pentenyl, sec.-Pentenyl, neo-Pentenyl, Isoprenyl, 1,2-Dimethylpropenyl, n-Hexenyl, iso-Hexenyl, sec.-Hexenyl, besonders bevorzugt C₂bis C₄-Alkenyl wie Vinyl, 1-Propenyl, iso-Propenyl, 1-Butenyl, iso-Butenyl, sec.-Butenyl und Buta-1,3-dienyl;
- C₆-C₁₄-Aryl wiePhenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, substituiert durch eine oder mehrere
   - C₁-C₁₂-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Halogene, wie Fluor, Chlor, Brom und Jod, wobei Chlor und Brom bevorzugt sind,
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - Silyloxygruppen OSiR⁷R⁸R⁹ wobei R⁷ bis R⁹ unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexlsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - oder Aminogruppen NR¹⁰R¹¹, wobei R¹⁰ und R¹¹ unabhängig voneinander aus Wasserstoff, C₁-C₆-Alkylgruppen und C₆-C₁₄-Arylgruppen ausgewählt sind, die einen gesättigten oder ungesättigten 5-10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
   - C₁-C₁₂-Thioethergruppen wie Methylthio, Ethylthio, Propylthio, 1-Methyl-propylthio, 1,1-Dimethylethylthio, Phenylthio, 1-Naphthylthio, 2-Naphthylthio, bevorzugt Methylthio, Ethylthio und Phenylthio;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryloxygruppen wie Phenoxy, 1-Naphthoxy, 2-Naphthoxy, 1-Anthroxy, 2-Anthroxy und 9-Anthroxy, bevorzugt Phenoxy, 1-Naphthoxy und 2-Naphthoxy, besonders bevorzugt Phenoxy,
- C₁-C₁₂-Thioethergruppen wie Methylthio, Ethylthio, Propylthio, 1-Methylpropylthio, 1,1-Dimethylethylthio, Phenylthio, 1-Naphthylthio, 2-Naphthylthio, bevorzugt Methylthio, Ethylthio und Phenylthio;
- Silyloxygruppen OSiR⁷R⁸R⁹, wobei R⁷ bis R⁹ unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexlsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- Halogene wie Fluor, Chlor, Brom und Jod, wobei Fluor und Chlor bevorzugt sind;
- oder Aminogruppen NR¹⁰R¹¹, wobei R¹⁰ und R¹¹ unabhängig voneinander aus Wasserstoff, C₁-C₆-Alkylgruppen und C₆-C₁₄-Arylgruppen ausgewählt sind, die einen gesättigten oder ungesättigten 5-10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe.

Dabei können R¹ und R² miteinander verbunden sein und zusammen mit den C-Atomen des Stammaromaten einen 5 bis 8-gliedrigen Ring bilden. Beispielsweise können R¹ und R² zusammen sein: -(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CH(CH₃)-O-, -CH-(C₆H₅)-O-, -O-CH₂-CH₂-O-, -O-C(CH₃)₂-O-, -N(CH₃)-CH₂-CH₂-N(CH₃)-, -N(CH₃)-CH₂-N(CH₃)- oder -O-Si(CH₃)₂-O-.

R³ wird gewählt aus den folgenden Gruppen:
- in α-Stellung verzweigtes C₃-C₁₂-Alkyl, wie Isopropyl, Isobutyl, tert.-Butyl, 2-Pentyl, 3-Pentyl, 2-Hexyl, 3-Hexyl, 2-Isopentyl, 3-Isopentyl, neo-Pentyl, 1,2-Dimethylpropyl 2-Heptyl, 3-Heptyl, 2-Isoheptyl, 3-Isoheptyl, 2-Octyl, 3-Octyl, 2-Nonyl, 3-Nonyl, 4-Nonyl, 1-Decyl, 2-Decyl, 3-Decyl, 4-Decyl, 2-Undecyl, 3-Undecyl, 4-Undecyl, 5-Undecyl, 2-Dodecyl, 3-Dodecyl, 4-Dodecyl, 5-Dodecyl, bevorzugt sind α-Stellung verzweigte C₁-C₆-Alkylgruppen wie Isopropyl, Isobutyl, tert.-Butyl, 2-Pentyl, 3-Pentyl, 2-Hexyl, 3-Hexyl, 2-Isopentyl, neo-Pentyl, 1,2-Dimethylpropyl und 3-Isopentyl, besonders bevorzugt ist die Isopropylgruppe, die Isobutylgruppe und die tert.-Butylgruppe.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl 2,2,4,4-Tetramethylcyclopentyl, 2-Methylcyclohexyl, 3-Methylcyclohexyl, 4-Methylcyclohexyl, cis-2,5-Dimethylcyclohexyl, trans-2,5-Dimethylcyclohexyl, 2,2,5,5-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,5,5-Tetrachlorcyclohexyl, 2-Thiomethylcyclopentyl, 2-Thiomethylcyclohexyl, 3-Thiomethyl-cyclopentyl oder 3-Thiomethylcyclohexyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₂-C₁₀-Alkenyl mit mindestens einer Doppelbindung in Konjugation zum Aromaten, bevorzugt Vinyl, Prop-1-enyl, But-1-enyl, iso-Butenyl, Buta-1,3-dienyl, Pent-1-enyl, Isoprenyl, Hex-1-enyl, Oct-1-enyl oder Dec-1-enyl; besonders bevorzugt Vinyl, Prop-1-enyl, iso-Butenyl und Buta-1,3-dienyl;
- C₆-C₁₄-Aryl wiePhenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wiePhenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, substituiert durch eine oder mehrere
   - C₁-C₁₂-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Halogene, wie Fluor, Chlor, Brom und Jod, wobei Fluor und Chlor bevorzugt sind,
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - Silyloxygruppen OSiR⁷R⁸R⁹ wobei R⁷ bis R⁹ unabhängig voneinander aus Wasserstoff, C₁-C₆-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexlsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - oder Aminogruppen NR¹⁰R¹¹, wobei R¹⁰ und R¹¹ unabhängig voneinander aus Wasserstoff, C₁-C₆-Alkylgruppen, Benzylresten und C₆-C₁₄-Arylgruppen ausgewählt sind, die einen gesättigten oder ungesättigten 5-10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;
- C₁-C₁₂-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryloxygruppen wie Phenoxy, 1-Naphthoxy, 2-Naphthoxy, 1-Anthroxy, 2-Anthroxy und 9-Anthroxy, bevorzugt Phenoxy, 1-Naphthoxy und 2-Naphthoxy, besonders bevorzugt Phenoxy,
- C₁-C₁₂-Thioethergruppen wie Methylthio, Ethylthio, Propylthio, 1-Methylpropylthio, 1,1-Dimethylethylthio, Phenylthio, 1-Naphthylthio, 2-Naphthylthio, bevorzugt Methylthio, Ethylthio und Phenylthio;
- Silyloxygruppen OSiR⁷R⁸R⁹, wobei R⁷ bis R⁹ unabhängig voneinander aus Wasserstoff, C₁-C₆-Alkylgruppen, Benzylgruppen und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylhexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- Halogene wie Fluor, Chlor, Brom und Jod, wobei Fluor und Chlor bevorzugt sind;
- oder Aminogruppen NR¹⁰R¹¹, wobei R¹⁰ und R¹¹ unabhängig voneinander aus Wasserstoff, C₁-C₆-Alkylgruppen, Benzylgruppen und C₆-C₁₄-Arylgruppen ausgewählt sind, die einen gesättigten oder ungesättigten 5-10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe.

In einer bevorzugte Ausführungsform bildet R³ mit einem benachbarten Rest, also R² oder R⁴, einen 5- bis 8-gliedrigen Ring, der weitere Substituenten tragen kann. Beispielsweise können R³ und R² oder R⁴ zusammen sein: -(CH₂)₃- (Trimethylen), -(CH₂)₄- (Tetramethylen), -(CH₂)₅- (Pentamethylen),-(CH₂)₆- (Hexamethylen), -CH₂-CH=CH-, -CH₂-CH=CH-CH₂-, -CH=CH-CH=CH-, -O-CH₂-O-, -O-CH(CH₃)-O-, -CH-(C₆H₅)-O-, -O-CH₂-CH₂-O-, -O-C(CH₃)₂-O-, -N(CH₃)-CH₂-CH₂-N(CH₃)-, -N(CH₃)-CH₂-N(CH₃)- oder -O-Si(CH₃)₂-O-.

In einer besonders bevorzugten Ausführungsform bilden R³ und R⁴ zusammen ein System wie in der allgemeinen Formel Ia.

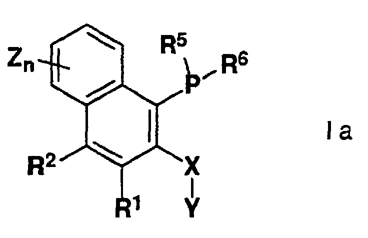

Dabei wird Z ausgewählt aus den folgenden Gruppen:
- Wasserstoff,
- Halogen wie Fluor, Chlor, Brom und Iod, bevorzugt Fluor oder Chlor;
- C₁-C₄-Alkyl wie Methyl, Ethyl, n-Propyl, iso-Propyl, n-Butyl, iso-Butyl, sec.-Butyl und tert.-Butyl;
- C₁-C₄-Alkoxy wie Methoxy, Ethoxy, n-Propoxy, n-Butoxy und tert.-Butoxy, und
   - n: ist eine ganze Zahl von 0 bis 4.

R⁵ und R⁶ sind unabhängig voneinander aus den folgenden Gruppen gewählt:
- in α-Stellung verzweigtes C₃-C₁₂-Alkyl, wie Isopropyl, Isobutyl, tert.-Butyl, 2-Pentyl, 3-Pentyl, 2-Hexyl, 3-Hexyl, 2-Isopentyl, 3-Isopentyl, neo-Pentyl, 1,2-Dimethylpropyl 2-Heptyl, 3-Heptyl, 2-Isoheptyl, 3-Isoheptyl, 2-Octyl, 3-Octyl, 2-Nonyl, 3-Nonyl, 4-Nonyl, 1-Decyl, 2-Decyl, 3-Decyl, 4-Decyl, 2-Undecyl, 3-Undecyl, 4-Undecyl, 5-Undecyl, 2-Dodecyl, 3-Dodecyl, 4-Dodecyl, 5-Dodecyl, bevorzugt sind α-Stellung verzweigte C₁-C₆-Alkylgruppen wie Isopropyl, Isobutyl, tert.-Butyl, 2-Pentyl, 3-Pentyl, 2-Hexyl, 3-Hexyl, 2-Isopentyl, neo-Pentyl, 1,2-Dimethylpropyl und 3-Isopentyl, besonders bevorzugt ist die Isopropylgruppe.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl 2,2,4,4-Tetramethylcyclopentyl, 2-Methylcyclohexyl, 3-Methylcyclohexyl, 4-Methylcyclohexyl, cis-2,5-Dimethylcyclohexyl, trans-2,5-Dimethylcyclohexyl, 2,2,5,5-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,5,5-Tetrachlorcyclohexyl, 2-Thiomethylcyclopentyl, 2-Thiomethylcyclohexyl, 3-Thiomethyl-cyclopentyl, 3-Thiomethylcyclohexyl und weitere Derivate; X bedeutet Sauerstoff, Schwefel, Selen, N-R¹², P-R¹² oder AsR¹². Dabei wird R¹² aus Wasserstoff, C₁-C₆-Alkylgruppen, Benzylgruppen und C₆-C₁₄-Arylgruppen ausgewählt.

Unter Y wird verstanden:
- Wasserstoff,
- Alkalimetallkationen wie Li⁺, Na⁺, K⁺, Rb⁺ und Cs⁺, bevorzugt sind Na⁺ und K⁺;
- C₁-C₁₈-Alkylacylanionen wie Acetat, Propionat, n-Butyrat, iso-Butyrat, Valerat, Capronat, Decanoat und Stearat; bevorzugt sind die C₁-C₆-Alkylacylanionen Acetat, Propionat, n-Butyrat, iso-Butyrat und besonders bevorzugt ist Acetat;
- C₆-C₁₄-Arylacylanionen, bevorzugt sind Benzoat, α-Naphthoat, β-Naphthoat oder 9-Anthracencarboxylat, und besonders bevorzugt ist Benzoat;
- SiR⁷R⁸R⁹, wobei R⁷ bis R⁹ unabhängig voneinander aus Wasserstoff, C₁-C₆-Alkylgruppen, Benzylgruppen und C₆-C₁₄-Arylgruppen ausgewählt sind, bevorzugt sind die Trimethylsilyloxy-, Triethylsilyloxy-, Triisopropylsilyloxy-, Diethylisopropylsilyloxy-, Dimethylthexlsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe.

Die Synthese der Liganden kann nach an sich bekannten Methoden erfolgen. Eine geeignete Methode wird von J. Heinicke, U. Jux, R. Kadyrov und M. He in Heteroatomic Chem. 1997, 8, 383-396, speziell Seite 393, und von J. Heinicke, M. He, R. Kadyrov, P. G. Jones in Heteroatomic Chem. 1998, 9, 183-193 beschrieben. Weitere Methoden werden in T. Rauchfuß Inorg. Chem. 1977, 16, 2966 beschrieben. Spezielle ortho-Dialkylphosphinokresol-Synthesen wurden in J. Heinicke et al., J. Organomet. Chem. 1983, 243, 1, J. Heinicke et al. Chem. Ber. 1996, *129,* 1061 und, Chem. Ber. 1996, 129, 1547 publiziert.

Die Herstellung der Komplexe aus Metall-Vorstufe und Ligand erfolgt vorteilhaft unmittelbar vor der Polymerisation.

Zur Darstellung der Komplexe werden der Ligand der Formel I mit der Metall-Vorstufe vorzugsweise in einem Lösemittel gemischt, wobei Toluol, Ethylbenzol, Chlorbenzol, Dichlorbenzol, ortho-Xylol, meta-Xylol, para-Xylol, sowie Mischungen derselben als Lösemittel geeignet sind. Des weiteren eignen sich cyclische Ether wie Tetrahydrofuran, Dioxan oder acyclische Ether wie Diethylether, Di-n-butylether, Di-isopropylether oder 1,2-Dimethoxyethan. Auch Ketone wie Aceton, Methylethylketon oder Diisobutylketon sind geeignet, desgleichen Amide wie Dimethylformamid oder Dimethylacetamid. Weiterhin sind Gemische dieser Lösemittel untereinander geeignet.

Als geeignete Molverhältnisse zwischen Ligand und Metallverbindung sei der Bereich zwischen 2:1 bis 1:5 genannt. Dabei ist der Bereich von 1,1:1 bis 1:1,1 bevorzugt.

Es wird vermutet, dass die erfindungsgemäßen Komplexe vorwiegend als Chelatstrukturen wie in Formel II bzw. II a vorliegen oder aber in dimerer oder oligomerer Form.

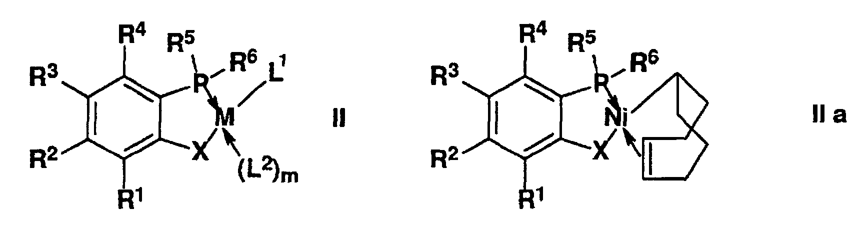

Dabei sind die Reste R¹-R⁶ sowie M und X wie oben beschrieben definiert; m ist ausgewählt aus den ganzen Zahlen 1, 2 oder 3.

Als Ligand L¹ kann Wasserstoff dienen oder die folgenden Reste:
- C₁-C₁₂-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl 2,2,4,4-Tetramethylcyclopentyl, 2-Methylcyclohexyl, 3-Methylcyclohexyl, 4-Methylcyclohexyl, cis-2,5-Dimethylcyclohexyl, trans-2,5-Dimethylcyclohexyl, 2,2,5,5-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,5,5-Tetrachlorcyclohexyl, 2-Thiomethylcyclopentyl, 2-Thiomethylcyclohexyl, 3-Thiomethyl-cyclopentyl, 3-Thiomethylcyclohexyl und weitere Derivate.

Als Ligand L² dienen die gebräuchlichen in der Komplexchemie verwendeten Neutralmoleküle oder Anionen (vgl. Elschenbroich, Salzer, "Einführung in die Organometallchemie", 3. Auflage, B.G. Teubner Verlag, Stuttgart 1990). Beispielsweise sind geeignet:
- aliphatische und aromatische Phosphane RₓPH₃₋ₓ, Amine RₓNH₃₋ₓ, wobei R aus der Gruppe der unter R¹ bis R⁴ definierten Reste ausgewählt ist,
- CO,
- Nitrile mit C₁-C₁₂-Alkyl- oder C₆-C₁₄-Arylresten wie Acetonitril, Propionitril, Butyronitril oder Benzonitril, Halogenidionen wie Fluorid, Chlorid, Bromid oder Iodid,
- Allylanionen,
- Benzylanionen,
- Arylanionen wie das Phenylanion,
- C₁-C₆-Alkylanionen wie (CH₃)⁻, (C₂H₅)⁻, (C₃H₇)⁻, (n-C₄H₉)⁻, (tert.-C₄H₉)⁻ oder (C₆H₁₄)⁻;
- einfach oder mehrfach ethylenisch ungesättigte Doppelbindungssysteme wie Ethenyl, Propenyl, cis-2-Butenyl, trans-2-Butenyl, Cyclohexenyl, Norbornenyl, 1,5-Cyclooctadienyl-Liganden ("COD"), 1,6-Cyclodecadienyl-Liganden, 1,5,9-*all*-*trans*-Cyclododecatrienyl-Liganden oder Norbornadienylliganden.

In einer besonders bevorzugten Ausführung sind die Liganden L¹ und L² miteinander durch eine oder mehrere kovalente Bindungen verknüpft. Beispiel für derartige Liganden sind der 4-Cyclooctenyl-Ligand, der 5-Cyclodecenyl-Ligand und der *all-trans*-1,4-Cyclododecadienyl-Ligand.

Die Polymerisation der 1-Olefine unter Verwendung der erfindungsgemäßen Metallkomplexe kann in an sich bekannter Weise durchgeführt werden.

Dabei ist die Reihenfolge der Zugabe der Reagenzien bei der Polymerisation unkritisch. So kann zunächst gasförmiges Monomer auf das Lösemittel aufgepresst bzw. flüssiges Monomer zudosiert werden, und anschließend wird der Katalysator zugegeben. Man kann aber auch die Katalysatorlösung zunächst mit weiterem Lösemittel verdünnen und anschließend Monomer zugeben.

Als geeignete 1-Olefine zur Polymerisation seien genannt: Ethylen, Propylen, 1-Buten, 1-Penten, 1-Hexen, 1-Hepten, 1-Octen, 1-Decen und 1-Eicosen, aber auch verzweigte Olefine wie 4-Methyl-1-Penten, Vinylcyclohexen und Vinylcyclohexan sowie Styrol, *para*-Methylstyrol und para-Vinylpyridin, wobei Ethylen und Propylen bevorzugt sind. Besonders bevorzugt ist Ethylen.

Auch die Copolymerisation zweier 1-Olefine gelingt mit dem erfindungsgemäßen Katalysatorsystem, wobei das Comonomer aus folgenden Gruppen gewählt werden kann:
- 1-Olefine wie Ethylen, Propylen, 1-Buten, 1-Penten, 1-Hexen, 1-Hepten, 1-Octen, 1-Decen und 1-Eicosen, aber auch verzweigte Olefine wie 4-Methyl-1-Penten, Vinylcyclohexen und Vinylcyclohexan sowie Styrol, *para*-Methylstyrol und *para*-Vinylpyridin, wobei Propylen, 1-Buten, 1-Penten, 1-Hexen, 1-Hepten, 1-Octen, 1-Decen bevorzugt sind;
- polare Monomere wie Acrylsäure, Acrylsäure-C₁-C₆-alkylester, Methacrylsäure, Methacrylsäure-C₁-C₆-alkylester, C₁-C₆-Alkyl-Vinylether und Vinylacetat; bevorzugt sind Acrylsäuremethylester, Acrylsäureethylester, Acrylsäure-n-butylester, Methylmethacrylat, Ethylmethacrylat, Butylmethacrylat, Ethylvinylether und Vinylacetat.

Dabei lässt sich das Verhältnis der beiden Monomere frei wählen.

Die eigentliche Polymerisation läuft üblicherweise bei einem Druck von 1-4000 bar und Temperaturen von 10-250°C, wobei die Bereiche von 2-100 bar sowie 40-150°C bevorzugt sind.

Als Lösemittel eignen sich aromatische Lösemittel wie Benzol, Toluol, Ethylbenzol, Chlorbenzol, Dichlorbenzol, ortho-Xylol, meta-Xylol und para-Xylol sowie Mischungen derselben. Des weiteren eignen sich cyclische Ether wie Tetrahydrofuran, Dioxan oder acyclische Ether wie Diethylether, Di-*n*-butylether, Di-isopropylether oder 1,2-Dimethoxyethan. Auch Ketone wie Aceton, Methylethylketon oder Diisobutylketon sind geeignet, desgleichen Amide wie Dimethylformamid oder Dimethylacetamid. Weiterhin sind Gemische dieser Lösemittel untereinander geeignet sowie Gemische dieser Lösemittel mit Wasser oder Alkoholen wie Methanol oder Ethanol.

Moderne großtechnische Polymerisationsverfahren für Olefine sind Suspensionsverfahren, Massepolymerisationsverfahren in flüssigem oder überkritischem Monomer sowie Gasphasenverfahren, wobei es sich bei letzteren um gerührte Gasphasen oder um Gasphasenwirbelschichtverfahren handeln kann.

In diesen großtechnischen Verfahren ist es vorteilhaft, katalytisch aktive Substanzen auf einem festen Träger immobilisiert einzusetzen. Andernfalls kann es zu Morphologieproblemen des Polymers (Brocken, Wandbeläge, Verstopfungen in Leitungen oder Wärmetauschern) kommen, die zum Abschalten der Anlage zwingen.

Das erfindungsgemäße Katalysatorsystem lässt sich gut auf einem festen Träger abscheiden, ohne signifikant an Aktivität einzubüßen. Als Trägermaterialien kommen z.B. poröse Metalloxide von Metallen der Gruppen 2-14 wie beispielsweise Mg, Ca, Sr, Ba, B, Al, Ti, Zr, Fe, Zn oder Si oder auch Mischungen derselben infrage, weiterhin Schichtsilikate, aber auch feste Halogenide wie beispielsweise Fluoride, Chloride oder Bromide von Metallen der Gruppen 1, 2 und 13 wie zum Beispiel Na, K, Mg, Ca, oder Al. Bevorzugte Beispiele für Metalloxide der Gruppen 2-14 sind SiO₂, B₂O₃, Al₂O₃, MgO, CaO und ZnO. Bevorzugte Schichtsilikate sind Montmorrilonite oder Bentonite; bevorzugte Halogenide sind MgCl₂ oder amorphes AlF₃.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel 332 oder S 2101 der Fa. W.R. Grace.

Als Partikelgröße des Trägermaterials haben sich mittlere Teilchendurchmesser von 1-300 µm bewährt, bevorzugt von 20 bis 80 µm, wobei der Teilchendurchmesser durch bekannte Methoden wie Siebmethoden bestimmt wird. Das Porenvolumen dieser Träger beträgt in der Regel 1,0 bis 3,0 ml/g, bevorzugt von 1,6 bis 2,2 ml/g und besonders bevorzugt von 1,7 bis 1,9 ml/g. Die BET-Oberfläche beträgt 200-750 m²/g, bevorzugt 250-400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45-1000°C eignen. Temperaturen von 100-750°C sind für Kieselgele und andere Metalloxide besonders geeignet; für MgCl₂-Träger sind Temperaturbereiche von 50-100°C bevorzugt. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind an sich unkritisch; das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Auch eine chemische Vorbehandlung des Trägermaterials ist möglich.

In der Regel ist das erfindungsgemäße Komplexsystem jedoch so unempfindlich gegenüber Verunreinigungen, dass auf ein Ausheizen des Trägermaterials verzichtet werden kann.

Zur Dotierung des Katalysators verfährt man im Allgemeinen so, dass man das Trägermaterial in einem Suspensionsmittel aufschlämmt und diese Suspension mit der Lösung des Komplexsystems vereinigt. Dabei beträgt das Volumen des Suspensionsmittels in der Regel das 1-20-fache des Porenvolumens des Katalysatorträgers.

Die geringe Wasserempfindlichkeit des erfindungsgemäßen Komplexsystems erlaubt auch, es in Emulsionspolymerisationen einzusetzen. Als Emulgatoren können anionische, kationische und auch nichtionische Emulgatoren verwendet werden.

Gebräuchliche nichtionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80; Alkylrest: C₈-C₃₆). Beispiele hierfür sind die Lutensol®-Marken der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂-C₁₈) und ethoxylierter Alkylphenole (EO-Grad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N,N,N*-Trimethylammonium)ethylparaffinsäureester, *N*-Cetylpyridiniumchlorid, *N*-Laurylpyridiniumsulfat sowie *N*-Cetyl*-N,N,N*-trimethylammoniumbromid, *N*-Dodecyl-*N,N,N*-trimethylammoniumbromid, *N,N*-Distearyl-*N,N*-dimethylammoniumchlorid sowie das Gemini-Tensid *N,N'*-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Die erhaltenen festen Polymerisate haben in der Regel Molekulargewichte von über 10.000 g.

Die aus den Polymerisaten erhaltenen Formmassen eignen sich gut zur Verarbeitung zu Folien, Platten, Wachsen oder Hohlkörpern wie Flaschen usw. Dazu können sie durch die gängigen Methoden verarbeitet werden wie beispielsweise Extrudieren, Spritzgießen oder Sinterpressen. Wachsartige Materialien können beispielsweise durch Pelletieren oder Extrudieren verarbeitet und in typischen Wachsanwendungen eingesetzt werden.

### Arbeitsbeispiele:

### Allgemeine Arbeitsvorschrift:

Die angegebenen Mengen an Ligand und Ni(COD)₂ wurden unter ArgonAtmosphäre bei 0°C in jeweils 10 ml des betreffenden Lösemittels gelöst. Anschließend wurden die beiden Lösungen gemischt, 10 Minuten bei 0°C und weitere 30 Minuten bei Zimmertemperatur gerührt und anschließend einen mit Argon inertisierten Autoklaven überführt. Unter Rühren wurde Ethylen bis zum angegebenen Druck aufgepresst und die Temperatur entsprechend Tabelle 1 geführt. Es wurde 15 Stunden gemäß Tabelle 1 polymerisiert, dann über eine auf -60°C gekühlte Kühlfalle entspannt und die flüchtigen Bestandteile durch Flash-Destillation bei 25-30°C/10⁻² mbar entfernt. Anschließend wurden Katalysatorreste durch Behandlung mit methanolischer Salzsäure entfernt, mit Methanol gewaschen und bei 25-30°C/10⁻² bis zur Gewichtskonstanz getrocknet.

Alle Versuche wurden mindestens einmal wiederholt, bei geringer Abweichung der Ergebnisse wurde der Mittelwert gebildet.

### Liganden:

4,6-Di*-tert.*-butyl-2-(diisopropylphosphino)-phenol (Formel 1)

4,6-Di-*tert.*-butyl-2-(dicyclohexylphosphino)-phenol (Formel 2)

4-Methoxy-2-dicyclohexylphosphinophenol (Formel 3)

4-Fluoro-2-diisopropylphosphinophenol (Formel 4)

### Beispiel 1:

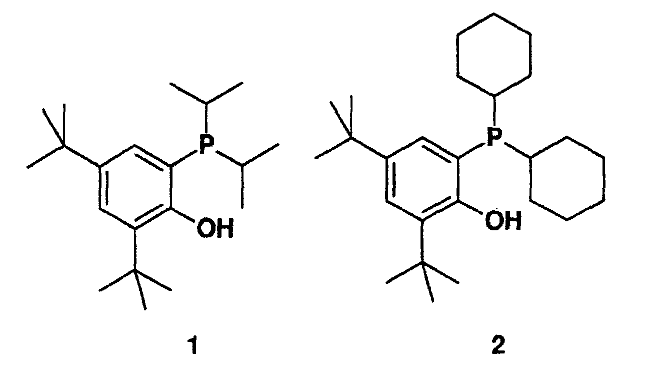

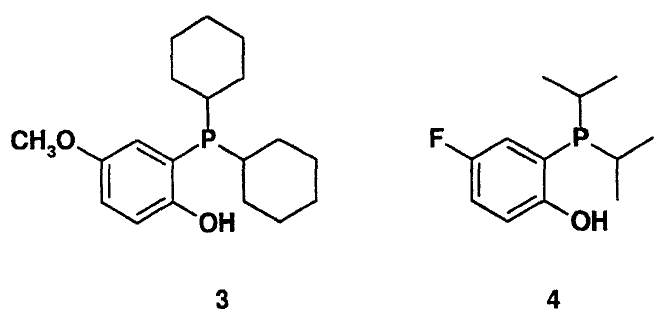

Als Ligand wurden 41,8 mg (0,12 mmol) 4,6-Di-*tert*.-butyl-2-(diisopropylphosphino)-phenol (Formel 1) und 35,5 mg (0,12 mmol) Ni(COD)₂ verwendet. Als Lösemittel für die Komplexierung wurden 20 ml Toluol verwendet. Es wurde 15 Stunden bei 80°C und einem Druck von 50 bar polymerisiert. Ausbeute an Polymer sowie polymeranalytische Daten gehen aus Tabelle 1 hervor.

### Beispiel 2:

Als Ligand wurden 40,3 mg (0,1 mmol) 4,6-Di-*tert.*-butyl-2-(dicyclohexylphosphino)-phenol (Formel 2) und 27,4 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Beispiel 3:

Als Ligand wurden 32,0 mg (0,1 mmol) 4-Methoxy-2-dicyclohexylphosphinophenol (Formel 3) und 27,5 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Beispiel 4:

Als Ligand wurden 22,8 mg (0,1 mmol) 4-Fluoro-2-diisopropylphosphinophenol (Formel 7) und 27,4 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Vergleichsbeispiele:

Liganden der Vergleichsbeispiele:
ortho-Diethylphosphinophenol (Formel A', aus: US 4,472,525)
4-Methyl-2-(phenyl-isopropylphosphino)-phenol (Formel C, aus: U. Jux, *Dissertation,* Universität Greifswald, 1996)
4-Methyl-2-(phenyl-isopropylphosphino)-phenyltrimethylsilylether (Formel C', aus: U. Jux, *Dissertation,* Universität Greifswald, 1996)
ortho-Diphenylphosphinophenol (Formel C'', aus: U. Jux, Dissertation, Universität Greifswald, 1996)
4-Methyl-2-diphenylphosphinophenol (Formel D, dieses und die folgenden Beispiele aus: Poster M. He, J. Heinicke *et al.*, GDCh-Konferenz München, Poster B197, 20. August 1998)
4-Methoxy-2-diphenylphosphinophenol (Formel D')
4,6-Di-*tert*.-butyl-2-diphenylphosphinophenol (Formel D")
4,6 -Di-*tert*.-butyl-2-(phenyl-tert.-butylphosphino)-phenol (Formel D''')
4-Methyl-2-(phenyl-*tert.*-butylphosphino)-phenol (Formel D'''')

### Vergleichsbeispiel V1

In 30 ml Benzol wurden 0,55 g (2 mmol) Ni(COD)₂ mit 364 mg (2 mmol) ortho-Diethylphosphinophenol (Formel A') versetzt und in einen Autoklaven mit Inertgasatmosphäre überführt. Ethylen wurde aufgepresst und der Autoklav unter Rühren aufgeheizt, bis eine Temperatur von 70-80°C erreicht wurde. Anschließend wurde 16 Stunden polymerisiert. Bei der Aufarbeitung wurden lediglich geringe Mengen an Oligomeren, aber kein Polyethylen gefunden.

### Vergleichsbeispiel V2

Als Ligand wurden 56,8 mg (0,22 mmol) 4-Methyl-2-(phenyl-isopropylphosphino)-phenol (Formel C) und 60,5 mg (0,22 mmol) Ni(COD)₂ verwendet. Als Lösemittel für die Komplexierung wurden 20 ml Toluol verwendet. Es wurde 12 Stunden bei 120°C und einem Druck von 40 bar polymerisiert. Ausbeute an Polymer sowie polymeranalytische Daten gehen aus Tabelle 1 hervor.

### Vergleichsbeispiel V3

Als Ligand wurden 72,6 mg (0,22 mmol) 4-Methyl-2-(Phenyl-isopropylphosphino)-phenyltrimethylsilylether (Formel C') und 60,5 mg (0,22 mmol) Ni(COD)₂ verwendet. Als Lösemittel für die Komplexierung wurden 20 ml Toluol verwendet. Es wurde 12 Stunden bei 120°C und einem Druck von 40 bar polymerisiert. Ausbeute an Polymer sowie polymeranalytische Daten gehen aus Tabelle 1 hervor.

### Vergleichsbeispiel V4

Als Ligand wurden 55,6 mg (0,22 mmol) 2-Diphenylphosphinophenol (Formel C'') und 55 mg (0,2 mmol) Ni(COD)₂ verwendet. Als Lösemittel für die Komplexierung wurden 30 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Vergleichsbeispiel V5:

Als Ligand wurden 29,2 mg (0,1 mmol) 4-Methyl-2-diphenylphosphinophenol (Formel D) und 27,4 mg (0,1 mmol) Ni(COD)₂ verwendet. Als Lösemittel für die Komplexierung wurden 20 ml Toluol verwendet.

Es wurde 15 Stunden bei 100°C und einem Druck von 50 bar polymerisiert. Ausbeute an Polymer sowie polymeranalytische Daten gehen aus Tabelle 1 hervor.

### Vergleichsbeispiel V6

Als Ligand wurden 30,8 mg (0,1 mmol) 4-Methoxy-2-diphenylphosphinophenol (Formel D') und 27,4 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Vergleichsbeispiel V7

Als Ligand wurden 39,0 mg (0,1 mmol) 4,6-Di-*tert.*-butyl-2-diphenylphosphinophenol (Formel D") und 27,5 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Vergleichsbeispiel V8

Als Ligand wurden 37,1 mg (0,1 mmol) 4,6-Di-*tert*.-butyl-2-(phenyl-*tert.*-butylphosphino)-phenol (Formel D''') und 27,5 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

### Vergleichsbeispiel V9

Als Ligand wurden 27,2 mg (0,1 mmol) 4-Methyl-2-(phenyl-*tert*.-butylphosphino)-phenol (Formel D'''') und 27,5 mg (0,1 mmol) Ni(COD)₂ verwendet. Als Lösemittel für die Komplexierung wurden 20 ml Toluol verwendet. Es wurde 15 Stunden bei 100°C und einem Druck von 50 bar polymerisiert. Ausbeute an Polymer sowie polymeranalytische Daten gehen aus Tabelle 1 hervor.

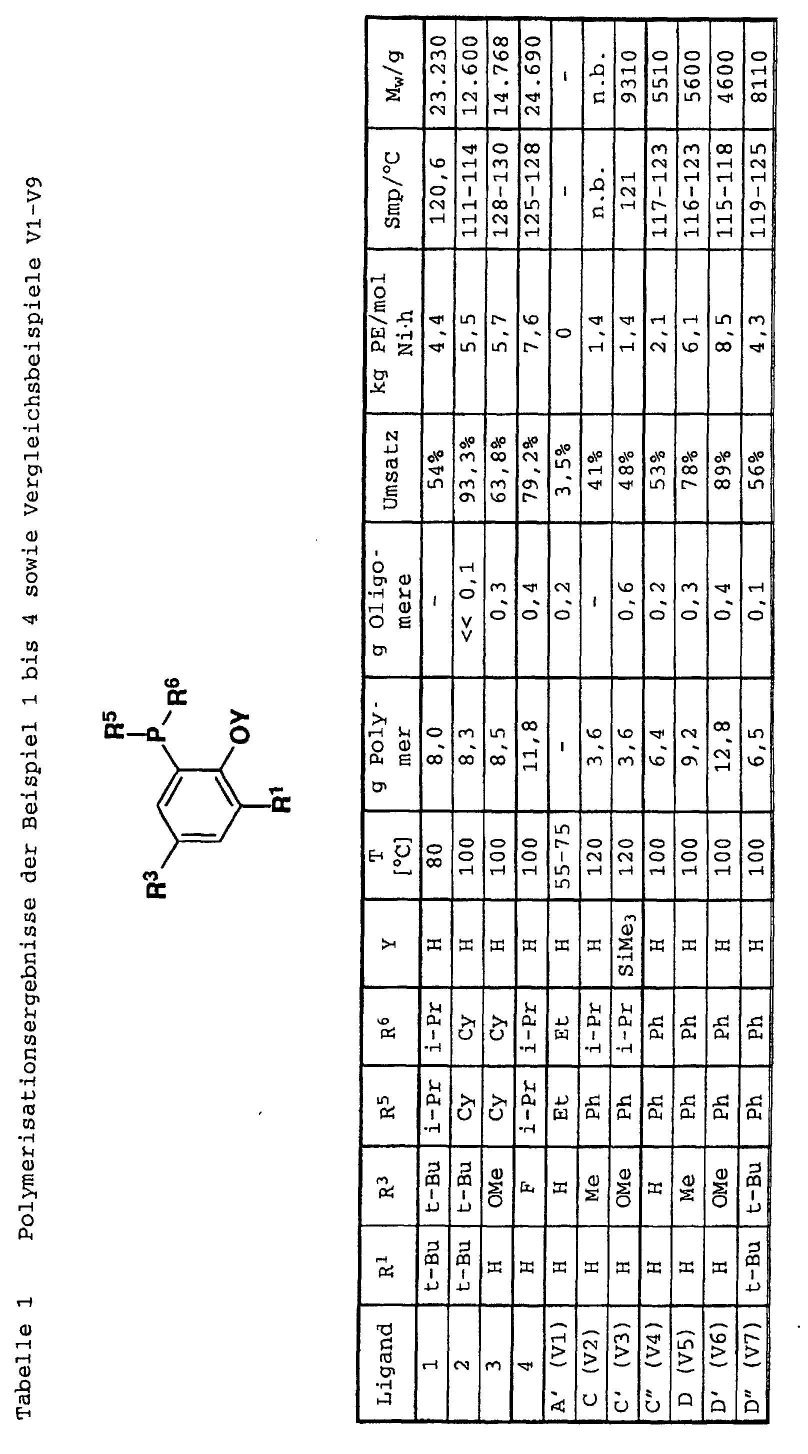

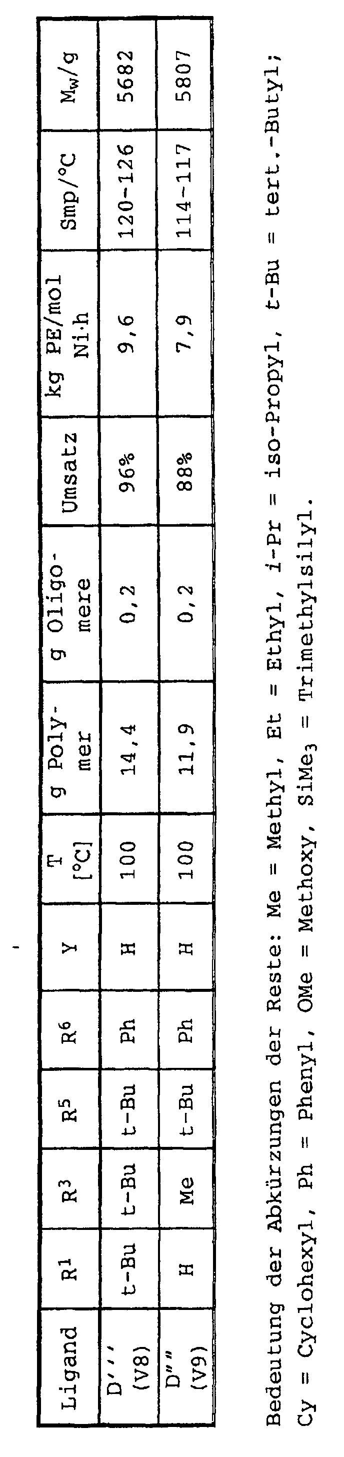

## Patentansprüche

1. Metallkomplexe, erhältlich aus einer Metall-Vorstufe eines Metalls der 6.-10. Gruppe des Periodensystems in der Oxidationsstufe 0 oder +2 und einem Ligand der allgemeinen Formel I, 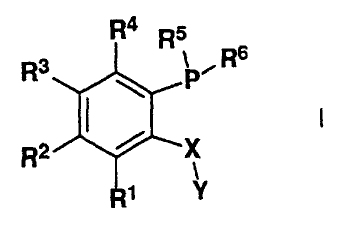 wobei
R¹, R² und R⁴ unabhängig voneinander bedeuten:
Wasserstoff,
C₁-C₁₂-Alkyl,
C₁-C₁₂-Alkyl, ein- oder mehrfach gleich oder verschieden substituiert durch C₁-C₁₂-Alkylgruppen, Halogene, C₁-C₁₂-Alkoxygruppen oder C₁-C₁₂-Thioethergruppen,
C₇-C₂₀-Arylalkyl,
C₂- bis C₁₂-Alkenyl,
C₃-C₁₂-Cycloalkyl,
C₃-C₁₂-Cycloalkyl, ein- oder mehrfach gleich oder verschieden substituiert durch C₁-C₁₂-Alkylgruppen, Halogene, C₁-C₁₂-Alkoxygruppen oder C₁-C₁₂-Thioethergruppen,
C₆-C₁₄-Aryl,
C₆-C₁₄-Aryl, gleich oder verschieden substituiert durch eine oder mehrere C₁-C₁₂-Alkylgruppen, Halogene, ein- oder mehrfach halogenierte C₁-C₁₂-Alkylgruppen,
C₁-C₁₂-Alkoxygruppen, Silyloxygruppen OSiR⁷R⁸R⁹, Aminogruppen NR¹⁰R¹¹ oder C₁-C₁₂-Thioethergruppen,
C₁-C₁₂-Alkoxygruppen,
C₆-C₁₄-Aryloxygruppen,
C₁-C₁₂-Thioethergruppen,
Silyloxygruppen OSiR⁷R⁸ R⁹,
Halogene
oder Aminogruppen NR¹⁰R¹¹;
R³ ausgewählt wird aus den folgenden Gruppen:
a-verzweigte C₃-C₁₂-Alkylgruppen,
C₁-C₁₂-Alkyl, in α-Stellung ein- oder mehrfach gleich oder verschieden substituiert durch C₁-C₁₂-Alkylgruppen, Halogene, C₁-C₁₂-Alkoxygruppen oder C₁-C₁₂-Thioethergruppen,
C₇-C₂₀-Arylalkyl,
C₂-C₁₀-Alkenyl,
C₃-C₁₀-Alkenylalkyl mit mindestens einer Doppelbindung, wobei mindestens eine C-C-Doppelbindung in Konjugation zum Aromaten steht, C₃-C₁₂-Cycloalkyl,
C₆-C₁₄-Aryl,
C₆-C₁₄-Aryl, gleich oder verschieden substituiert durch eine oder mehrere C₁-C₁₂-Alkylgruppen, Halogene, ein- oder mehrfach halogenierte C₁-C₁₂-Alkylgruppen,
C₁-C₁₂-Alkoxygruppen, Silyloxygruppen OSiR⁷R⁸R⁹, Aminogruppen NR¹⁰R¹¹ oder
C₁-C₁₂-Thioethergruppen,
C₁-C₁₂-Alkoxygruppen,
C₆-C₁₄-Aryloxygruppen,
C₁-C₁₂-Thioethergruppen,
Silyloxygruppen OSiR⁷R⁸ R⁹,
Halogene
oder Aminogruppen NR¹⁰R¹¹,
wobei jeweils benachbarte Reste R¹ bis R⁴ miteinander einen 5- bis 8-gliedrigen Ring bilden können;
R⁵ und R⁶ unabhängig voneinander ausgewählt werden aus,
in α-Stellung verzweigte C₃-C₁₂-Alkylgruppen,
C₃-C₁₂-Cycloalkylgruppen,
C₃-C₁₂-Cycloalkylgruppen, gleich oder verschieden substituiert durch eine oder mehrere C₁-C₁₂-Alkylgruppen, Halogen, ein- oder mehrfach halogenierte C₁-C₁₂-Alkylgruppen,
C₁-C₁₂-Alkoxygruppen, Silyloxygruppen
OSiR⁷R⁸R⁹, Aminogruppen NR¹⁰R¹¹ oder
C₁-C₁₂-Thioethergruppen,
X Sauerstoff, Schwefel, Selen, N-R¹², P-R¹² oder AsR¹² bedeutet,
Y für Wasserstoff steht oder
Alkalimetallkationen,
C₁-C₁₈-Alkylacylanionen,
C₆-C₁₄-Arylacylanionen oder
SiR⁷R⁸R⁹,
R⁷ bis R¹² unabhängig voneinander aus Wasserstoff, verzweigten oder unverzweigten C₁-C₆-Alkylgruppen, Benzylresten und C₆-C₁₄-Arylgruppen ausgewählt werden, wobei jeweils zwei benachbarte Reste R⁷ und R⁸ oder R¹⁰ und R¹¹ miteinander einen gesättigten oder ungesättigten 5 bis 8-gliedrigen Ring bilden können.

2. Metallkomplexe gemäß Anspruch 1, erhältlich aus einer Metall-Vorstufe eines Metalls M der Gruppe Eisen, Kobalt oder Nickel in der Oxidationsstufe 0 oder Palladium in der Oxidationsstufe 0 oder +2, wobei der oder die Liganden der Metallvorstufe ausgewählt sind aus der Gruppe der folgenden Liganden:
ethylenisch ungesättigte Doppelbindungssysteme,
Phosphane RₓPH₃₋ₓ
Amine RₓNH₃₋ₓ,
CO,
Nitrile,
Halogenidionen,
C₁-C₆-Alkylanionen,
Allylanionen,
Benzylanionen oder
Arylanionen, wobei
R aus Wasserstoff, C₁-C₆-Alkylgruppen und C₆-C₁₄-Arylgruppen ausgewählt wird,
x eine ganze Zahl 0,1,2 oder 3 ist;
und einem Ligand der allgemeinen Formel 1, bei dem
R¹, R² und R⁴ unabhängig voneinander bedeuten:
Wasserstoff,
C₁-C₆-Alkyl,
C₁-C₆-Alkyl, ein- oder mehrfach gleich oder verschieden substituiert durch C₁-C₆-Alkylgruppen, Halogene, C₁-C₆-Alkoxygruppen oder C₁-C₆-Thioethergruppen,
C₇-C₂₀-Arylalkyl,
C₂- bis C₆-Alkenyl,
C₅-C₇-Cycloalkyl,
C₅-C₇-Cycloalkyl, ein- oder mehrfach gleich oder verschieden substituiert durch C₁-C₆-Alkylgruppen, Halogene, C₁-C₆-Alkoxygruppen oder C₁-C₆-Thioethergruppen,
C₆-C₁₄-Aryl,
C₆-C₁₄-Aryl, gleich oder verschieden substituiert durch eine oder mehrere C₁-C₆-Alkylgruppen, Halogene, ein- oder mehrfach halogenierte C₁-C₆-Alkylgruppen, C₁-C₆-Alkoxygruppen, Silyloxygruppen OSiR⁷R⁸R⁹, Aminogruppen NR¹⁰R¹¹ oder C₁-C₆-Thioethergruppen,
C₁-C₆-Alkoxygruppen,
C₆-C₁₄-Aryloxygruppen,
C₁-C₆-Thioethergruppen,
Silyloxygruppen OSiR⁷R⁸ R⁹,
Halogene
oder Aminogruppen NR¹⁰R¹¹;
R³ ausgewählt wird aus den folgenden Gruppen:
a-verzweigte C₃-C₆-Alkylgruppen,
C₁-C₆-Alkyl, in α-Stellung ein- oder mehrfach gleich oder verschieden substituiert durch Halogene, C₁-C₆-Alkoxygruppen oder C₁-C₆-Thioethergruppen,
C₇-C₂₀-Arylalkyl,
C₂-C₁₀-Alkenyl,
C₃-C₁₀-Alkenylalkyl mit mindestens einer Doppelbindung in Konjugation zum Aromaten,
C₅-C₇-Cycloalkyl,
C₅-C₇-Cycloalkyl, ein- oder mehrfach gleich oder verschieden substituiert durch
C₁-C₆-Alkylgruppen, Halogene, C₁-C₆-Alkoxygruppen oder C₁-C₆-Thioethergruppen,
C₆-C₁₄-Aryl,
C₆-C₁₄-Aryl, gleich oder verschieden substituiert durch eine oder mehrere C₁-C₆-Alkylgruppen, Halogene, ein- oder mehrfach halogenierte C₁-C₆-Alkylgruppen, C₁-C₆-Alkoxygruppen, Silyloxygruppen OSiR⁷R⁸R⁹, Aminogruppen NR¹⁰R¹¹ oder C₁-C₆-Thioethergruppen,
C₁-C₆-Alkoxygruppen,
C₆-C₁₄-Aryloxygruppen,
C₁-C₆-Thioethergruppen,
Silyloxygruppen OSiR⁷R⁸ R⁹,
Halogene
oder Aminogruppen NR¹⁰R¹¹,
wobei jeweils benachbarte Reste R¹ bis R⁴ miteinander einen 5- bis 8-gliedrigen Ring bilden können;
R⁵ und R⁶ unabhängig voneinander ausgewählt werden aus α-verzweigte C₃-C₆-Alkylgruppen,
C₅-C₇-Cycloalkylgruppen,
C₅-C₇-Cycloalkylgruppen, gleich oder verschieden substituiert durch eine oder mehrere C₁-C₁₂-Alkylgruppen, Halogen, ein- oder mehrfach halogenierte C₁-C₆-Alkylgruppen,
C₁-C₆-Alkoxygruppen, Silyloxygruppen OSiR⁷R⁸R⁹, Aminogruppen NR¹⁰R¹¹ oder C₁-C₆-Thioethergruppen,
Benzylresten,
X Sauerstoff oder Schwefel bedeutet,
Y für Wasserstoff steht oder Alkalimetallkationen,
C₁-C₃-Alkylacylanionen,
C₆-C₁₄-Arylacylanionen oder
SiR⁷R⁸R⁹,
R⁷ bis R¹¹ unabhängig voneinander aus Wasserstoff,
C₁-C₆-Alkylgruppen, Benzylresten und
C₆-C₁₄-Arylgruppen ausgewählt werden, wobei jeweils zwei benachbarte Reste R⁷ und R⁸ oder R¹⁰ und R¹¹ miteinander einen gesättigten oder ungesättigten 5-8-gliedrigen Ring bilden können,

3. Metallkomplexe gemäß Anspruch 1, erhältlich aus einer Metallvorstufe, ausgewählt aus den Verbindungen Ni(C₂H₄)₃, Ni(1,5-Cyclooctadien)₂, Ni(1,6-Cyclodecadienen)₂, Ni(1,5,9-all-trans-Cyclododecatrien)₂, Pd(Norbornadien)Cl₂, Ni[P(C₆H₅)₃]₄ und Pd[P(C₆H₅)₃]₄,
und einem Ligand der allgemeinen Formel 1, bei dem
R¹, R² und R⁴ unabhängig voneinander bedeuten:
Wasserstoff,
C₁-C₄-Alkyl,
C₁-C₄-Alkyl, ein- oder mehrfach gleich oder verschieden substituiert durch C₁-C₄-Alkylgruppen, Halogene, C₁-C₄-Alkoxygruppen oder C₁-C₄-Thioethergruppen,
Benzyl,
C₂-C₄-Alkenyl,
C₅-C₇-Cycloalkyl,
Phenyl,
Phenyl, gleich oder verschieden substituiert durch eine oder mehrere C₁-C₄-Alkyl, Halogen, ein- oder mehrfach halogenierte C₁-C₄-Alkylgruppen, C₁-C₄-Alkoxygruppen, Silyloxygruppen
OSiR⁷R⁸R⁹,
C₁-C₄-Alkoxygruppen,
Phenoxy,
C₁-C₄-Thioethergruppen,
Silyloxygruppen OSiR⁷R⁸ R⁹,
Halogen,
oder Aminogruppen NR¹⁰R¹¹;
R³ ausgewählt wird aus den folgenden Gruppen:
a-verzweigte C₃-C₆-Alkylgruppen,
C₁-C₄-Alkyl, in α-Stellung ein- oder mehrfach gleich oder verschieden substituiert durch Halogene oder C₁-C₄-Alkoxygruppen,
Benzyl,
C₅-C₇-Cycloalkyl,
Phenyl,
Phenyl, gleich oder verschieden substituiert durch eine oder mehrere C₁-C₄-Alkylgruppen, Halogene, ein- oder mehrfach halogenierte C₁-C₄-Alkylgruppen, C₁-C₄-Alkoxygruppen, Silyloxygruppen OSiR⁷R⁸R⁹ oder Aminogruppen NR¹⁰R¹¹,
C₁-C₄-Alkoxygruppen,
Phenoxy,
C₁-C₄-Thioethergruppen,
Silyloxygruppen OSiR⁷R⁸ R⁹,
Halogene
oder Aminogruppen NR¹⁰R¹¹,
wobei jeweils benachbarte Reste R¹ bis R⁴ miteinander einen 5- bis 8-gliedrigen Ring bilden können;
R⁵ und R⁶ unabhängig voneinander ausgewählt werden aus α-verzweigte C₃-C₆-Alkylgruppen, oder C₅-C₇-Cycloalkylgruppen,
X Sauerstoff oder Schwefel bedeutet,
Y für Wasserstoff steht oder Alkalimetallkationen,
C₁-C₃-Alkylacylanionen,
Benzoationen oder
SiR⁷R⁸R⁹, wobei R⁷ bis R⁹ unabhängig voneinander aus Wasserstoff, C₁-C₄-Alkylgruppen und Phenylgruppen ausgewählt sind;
R⁷ bis R¹¹ unabhängig voneinander aus Wasserstoff, C₁-C₄-Alkylgruppen und Phenylgruppen ausgewählt werden, wobei jeweils zwei benachbarte Reste R⁷ und R⁸ oder R¹⁰ und R¹¹ miteinander einen gesättigten oder ungesättigten 5 bis 8-gliedrigen Ring bilden können,

4. Metallkomplexe gemäß Anspruch 1, erhältlich aus Ni(1,5-dicyclooctadienyl)₂
und einem Ligand der allgemeinen Formel I, wobei
R¹, R² und R⁴ unabhängig voneinander bedeuten:
Wasserstoff,
C₁-C₄-Alkyl,
Benzyl,
C₅-C₇-Cycloalkyl,
Phenyl,
Phenyl, gleich oder verschieden substituiert durch eine oder mehrere C₁-C₄-Alkyl, Halogen, ein- oder mehrfach halogenierte C₁-C₄-Alkylgruppen, C₁-C₄-Alkoxygruppen oder Silyloxygruppen OSiR⁷R⁸R⁹,
C₁-C₄-Alkoxygruppen,
Phenoxy,
C₁-C₄-Thioethergruppen,
Silyloxygruppen OSiR⁷R⁸ R⁹,
Halogen;
R³ ausgewählt wird aus den folgenden Gruppen:
a-verzweigte C₃-C₆-Alkylgruppen,
C₁-C₄-Alkyl, in α-Stellung ein- oder mehrfach gleich oder verschieden substituiert durch Halogene oder C₁-C₄-Alkoxygruppen,
Benzyl,
C₅-C₇-Cycloalkyl,
Phenyl,
Phenyl, gleich oder verschieden substituiert durch eine oder mehrere C₁-C₄-Alkylgruppen, Halogene, ein- oder mehrfach halogenierte C₁-C₄-Alkylgruppen, C₁-C₄-Alkoxygruppen oder Silyloxygruppen OSiR⁷R⁸R⁹,
C₁-C₄-Alkoxygruppen,
Phenoxy,
C₁-C₄-Thioethergruppen,
Silyloxygruppen OSiR⁷R⁸ R⁹,
Halogene
oder Aminogruppen NR¹⁰R¹¹,
wobei jeweils benachbarte Reste R¹ bis R⁴ miteinander einen 5- bis 8-gliedrigen Ring bilden können;
R⁵ und R⁶ unabhängig voneinander ausgewählt werden aus α-verzweigte C₃-C₆-Alkylgruppen, oder C₅-C₇-Cycloalkylgruppen,
R⁷ bis R¹¹ unabhängig voneinander aus Wasserstoff,
C₁-C₄-Alkylgruppen und Phenylgruppen ausgewählt werden, wobei jeweils zwei benachbarte Reste R⁷ und R⁸ oder R¹⁰ bis R¹¹ miteinander einen gesättigten oder ungesättigten 5 bis 8-gliedrigen Ring bilden können,
X Sauerstoff oder Schwefel und
Y Wasserstoff bedeutet.

5. Metallkomplexe gemäß Anspruch 1, erhältlich aus
Ni(1,5-dicyclooctadienyl)₂
und einem Ligand der allgemeinen Formel I a, wobei 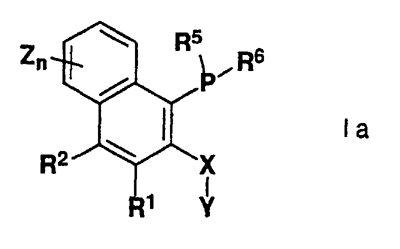
R¹ und R² unabhängig voneinander bedeuten:
Wasserstoff,
C₁-C₄-Alkyl, verzweigt oder unverzweigt, Benzyl,
C₅-C₇-Cycloalkyl,
Phenyl,
Phenyl, gleich oder verschieden substituiert durch eine oder mehrere C₁-C₄-Alkyl, Halogen, ein- oder mehrfach halogenierte C₁-C₄-Alkylgruppen, C₁-C₄-Alkoxygruppen oder Silyloxygruppen OSiR⁷R⁸R⁹,
C₁-C₄-Alkoxygruppen,
Phenoxy,
C₁-C₄-Thioethergruppen,
Silyloxygruppen OSiR⁷R⁸ R⁹,
Halogen;
R⁵ und R⁶ unabhängig voneinander ausgewählt werden aus in α-Stellung verzweigte C₃-C₁₂-Alkylgruppen, C₅-C₇-Cycloalkylgruppen,
R⁷ bis R¹¹ unabhängig voneinander aus Wasserstoff,
C₁-C₄-Alkylgruppen und Phenylgruppen ausgewählt werden, wobei jeweils zwei benachbarte Reste R⁷ bis R¹¹ miteinander einen gesättigten oder ungesättigten 5-8-gliedrigen Ring bilden können,
Z ausgewählt wird aus
Halogen,
C₁-C₄-Alkoxy oder
C₁-C₄-Thioethergruppen;
X Sauerstoff oder Schwefel und
Y Wasserstoff bedeutet.

6. Katalysator zur Polymerisation von 1-Olefinen, enthaltend Metallkomplexe gemäß den Ansprüchen 1 bis 5, die man auf einem festen Trägermaterial immobilisiert hat.

7. Katalysator zur Polymerisation von 1-Olefinen, enthaltend Metallkomplexe gemäß den Ansprüchen 1 bis 5, die man auf einem festen Trägermaterial immobilisiert hat, wobei dieses Trägermaterial ausgewählt wird aus porösen Metalloxiden, Schichtsilikaten oder festen Halogeniden.

8. Verfahren zur Polymerisation von 1-Olefinen, **dadurch gekennzeichnet, dass** man Metallkomplexe gemäß den Ansprüchen 1 bis 5 oder Katalysatoren gemäß den Ansprüchen 6 bis 7 bei einem Druck von 1-1000 bar und einer Temperatur von 10-250°C mit einem oder mehreren 1-Olefinen in Kontakt bringt.

9. Verfahren zur Polymerisation von 1-Olefinen, **dadurch gekennzeichnet, dass** man Metallkomplexe gemäß den Ansprüchen 1 bis 5 oder Katalysatoren gemäß den Ansprüchen 6 bis 7 bei einem Druck von 2-100 bar und einer Temperatur von 40-150°C mit einem oder mehreren 1-Olefinen in Kontakt bringt.

10. Verfahren gemäß den Ansprüchen 8 bis 9, **dadurch gekennzeichnet, dass** das
1-Olefin Ethylen ist.

11. Polymerisate von einem oder mehreren 1-Olefinen, erhältlich durch Polymerisation eines oder mehrerer 1-Olefine mit einem Katalysatorsystem gemäß den Ansprüchen 1 bis 7.

12. Formmassen, erhältlich aus den Polymerisaten gemäß Anspruch 11, zur Herstellung von Folien, Platten, Wachsen, Fasern oder Hohlkörpern.

## Claims

1. A metal complex obtainable from a metal precursor of a metal of the 6^{th}-10^{th} groups of the Periodic Table in the oxidation state 0 or +2 and a ligand of the formula I, 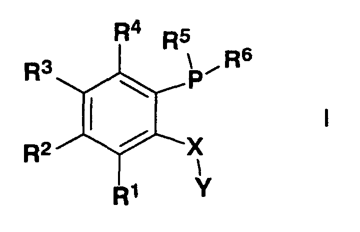 where
R¹, R² and R⁴ are, independently of one another:
hydrogen,
C₁-C₁₂-alkyl,
C₁-C₁₂-alkyl bearing one or more identical or different C₁-C₁₂-alkyl groups, halogens,
C₁-C₁₂-alkoxy groups or C₁-C₁₂-thioether groups as substituents,
C₇-C₂₀-arylalkyl,
C₂-C₁₂-alkenyl,
C₃-C₁₂-cycloalkyl,
C₃-C₁₂-cycloalkyl bearing one or more identical or different C₁-C₁₂-alkyl groups, halogens,
C₁-C₁₂-alkoxy groups or C₁-C₁₂-thioether groups as substituents,
C₆-C₁₄-aryl,
C₆-C₁₄-aryl bearing one or more identical or different C₁-C₁₂-alkyl groups, halogens, monohalogenated or polyhalogenated C₁-C₁₂-alkyl groups, C₁-C₁₂-alkoxy groups, silyloxy groups OSiR⁷R⁸R⁹, amino groups NR¹⁰R¹¹ or
C₁-C₁₂-thioether groups as substituents,
C₁-C₁₂-alkoxy groups,
C₆-C₁₄-aryloxy groups,
C₁-C₁₂-thioether groups,
silyloxy groups OSiR⁷R⁸ R⁹,
halogens
or amino groups NR¹⁰R¹¹;
R³ is selected from among the following groups:
α-branched C₃-C₁₂-alkyl groups,
C₁-C₁₂-alkyl bearing one or more identical or different C₁-C₁₂-alkyl groups, halogens,
C₁-C₁₂-alkoxy groups or C₁-C₁₂-thioether groups as substituents in the α position,
C₇-C₂₀-arylalkyl,
C₂-C₁₀-alkenyl,
C₃-C₁₀-alkenylalkyl having at least one double bond, where at least one C-C double bond is conjugated with the aromatic,
C₃-C₁₂-cycloalkyl,
C₆-C₁₄-aryl,
C₆-C₁₄-aryl bearing one or more identical or different C₁-C₁₂-alkyl groups, halogens, monohalogenated or polyhalogenated C₁-C₁₂-alkyl groups, C₁-C₁₂-alkoxy groups, silyloxy groups OSiR⁷R⁸R⁹, amino groups NR¹⁰R¹¹ or
C₁-C₁₂-thioether groups as substituents,
C₁-C₁₂-alkoxy groups,
C₆-C₁₄-aryloxy groups,
C₁-C₁₂-thioether groups,
silyloxy groups OSiR⁷R⁸ R⁹,
halogens
and amino groups NR¹⁰R¹¹,
where in each case adjacent radicals R¹ to R⁴ may together form a 5- to 8-membered ring;
R⁵ and R⁶ are selected independently from among
α-branched C₃-C₁₂-alkyl groups,
C₃-C₁₂-cycloalkyl groups,
C₃-C₁₂-cycloalkyl groups bearing one or more identical or different C₁-C₁₂-alkyl groups, halogens, monohalogenated or polyhalogenated
C₁-C₁₂-alkyl groups, C₁-C₁₂-alkoxy groups,
silyloxy groups OSiR⁷R⁸R⁹, amino groups NR¹⁰R¹¹ or C₁-C₁₂-thioether groups as substituents,
X is oxygen, sulfur, selenium, N-R¹², P-R¹² or AsR¹²,
Y is hydrogen or
an alkali metal cation,
a C₁-C₁₈-alkylacyl anion,
a C₆-C₁₄-arylacyl anion or
SiR⁷R⁸R⁹,
R⁷ to R¹² are selected independently from among hydrogen, branched or unbranched C₁-C₆-alkyl groups, benzyl radicals and C₆-C₁₄-aryl groups, where in each case two adjacent radicals R⁷ and R⁸ or R¹⁰ and R¹¹ may together form a saturated or unsaturated 5- to 8-membered ring.

2. A metal complex as claimed in claim 1, obtainable from a metal precursor of a metal M selected from the group consisting of iron, cobalt or nickel in the oxidation state 0 or palladium in the oxidation state 0 or +2, where the ligand or ligands of the metal precursor are selected from the group consisting of the following ligands:
ethylenically unsaturated double bond systems,
phosphines RₓPH₃₋ₓ
amines RₓNH₃₋ₓ,
CO,
nitriles,
halide ions,
C₁-C₆-alkyl anions,
allyl anions,
benzyl anions and
aryl anions, where
R is selected from among hydrogen, C₁-C₆-alkyl groups and C₆-C₁₄-aryl groups,
x is 0, 1, 2 or 3;
and a ligand of the formula I in which
R¹, R² and R⁴ are, independently of one another:
hydrogen,
C₁-C₆-alkyl,
C₁-C₆-alkyl bearing one or more identical or different C₁-C₆-alkyl groups, halogens,
C₁-C₆-alkoxy groups or C₁-C₆-thioether groups as substituents,
C₇-C₂₀-arylalkyl,
C₂-C₆-alkenyl,
C₅-C₇-cycloalkyl,
C₅-C₇-cycloalkyl, bearing one or more identical or different C₁-C₆-alkyl groups, halogens, C₁-C₆-alkoxy groups or
C₁-C₆-thioether groups as substituents,
C₆-C₁₄-aryl,
C₆-C₁₄-aryl, bearing one or more identical or different C₁-C₆-alkyl groups, halogens, monohalogenated or polyhalogenated C₁-C₆-alkyl groups, C₁-C₆-alkoxy groups, silyloxy groups OSiR⁷R⁸R⁹, amino groups NR¹⁰R¹¹ or
C₁-C₆-thioether groups as substituents,
C₁-C₆-alkoxy groups,
C₆-C₁₄-aryloxy groups,
C₁-C₆-thioether groups,
silyloxy groups OSiR⁷R⁸ R⁹,
halogens
or amino groups NR¹⁰R¹¹;
R³ is selected from among the following groups:
α-branched C₃-C₆-alkyl groups,
C₁-C₆-alkyl, bearing one or more identical or different halogens, C₁-C₆-alkoxy groups or C₁-C₆-thioether groups as substituents in the α-position,
C₇-C₂₀-arylalkyl,
C₂-C₁₀-alkenyl,
C₃-C₁₀-alkenylalkyl having at least one double bond conjugated with the aromatic,
C₅-C₇-cycloalkyl,
C₅-C₇-cycloalkyl, bearing one or more identical or different C₁-C₆-alkyl groups, halogens, C₁-C₆-alkoxy groups or
C₁-C₆-thioether groups as substituents,
C₆-C₁₄-aryl,
C₆-C₁₄-aryl bearing one or more identical or different C₁-C₆-alkyl groups, halogens, monohalogenated or polyhalogenated C₁-C₆-alkyl
groups, C₁-C₆-alkoxy groups, silyloxy groups OSiR⁷R⁸R⁹, amino groups NR¹⁰R¹¹ or
C₁-C₆-thioether groups as substituents,
C₁-C₆-alkoxy groups,
C₆-C₁₄-aryloxy groups,
C₁-C₆-thioether groups,
silyloxy groups OSiR⁷R⁸ R⁹,
halogens
and amino groups NR¹⁰R¹¹,
where in each case adjacent radicals R¹ to R⁴ may together form a 5- to 8-membered ring;
R⁵ and R⁶ are selected independently from among
α-branched C₃-C₆-alkyl groups,
C₅-C₇-cycloalkyl groups,
C₅-C₇-cycloalkyl groups bearing one or more identical or different C₁-C₁₂-alkyl groups, halogens, monohalogenated or polyhalogenated C₁-C₆-alkyl groups, C₁-C₆-alkoxy groups, silyloxy groups OSiR⁷R⁸R⁹, amino groups NR¹⁰R¹¹ or C₁-C₆-thioether groups as substituents, benzyl radicals,
X is oxygen or sulfur,
Y is hydrogen or
an alkali metal cation,
a C₁-C₃-alkylacyl anion,
a C₆-C₁₄-arylacyl anion or
SiR⁷R⁸R⁹,
R⁷ to R¹¹ are selected independently from among hydrogen, C₁-C₆-alkyl groups, benzyl radicals and C₆-C₁₄-aryl groups, where in each case two adjacent radicals R⁷ and R⁸ or R¹⁰ and R¹¹ may together form a saturated or unsaturated 5-8-membered ring.

3. A metal complex as claimed in claim 1, obtainable from a metal precursor selected from among the compounds Ni(C₂H₄)₃, Ni(1,5-cyclooctadiene)₂, Ni(1,6-cyclodecadienene)₂, Ni(1,5,9-all-trans-cyclododecatriene)₂, Pd(norbornadiene)Cl₂, Ni[P(C₆H₅)₃]₄ and Pd[P(C₆H₅)₃]₄,
and a ligand of the formula I in which
R¹, R² and R⁴ are, independently of one another:
hydrogen,
C₁-C₄-alkyl,
C₁-C₄-alkyl bearing one or more identical or different C₁-C₄-alkyl groups, halogens,
C₁-C₄-alkoxy groups or C₁-C₄-thioether groups as substituents,
benzyl,
C₂-C₄-alkenyl,
C₅-C₇-cycloalkyl,
phenyl,
phenyl bearing one or more identical or different C₁-C₄-alkyl groups, halogens, monohalogenated or polyhalogenated C₁-C₄-alkyl groups, C₁-C₄-alkoxy groups or silyloxy groups OSiR⁷R⁸R⁹ as substituents,
C₁-C₄-alkoxy groups,
phenoxy,
C₁-C₄-thioether groups,
silyloxy groups OSiR⁷R⁸ R⁹,
halogen,
or amino groups NR¹⁰R¹¹;
R³ is selected from among the following groups:
α-branched C₃-C₆-alkyl groups,
C₁-C₄-alkyl bearing one or more identical or different halogens or C₁-C₄-alkoxy groups as substituents in the α position,
benzyl,
C₅-C₇-cycloalkyl,
phenyl,
phenyl bearing one or more identical or different C₁-C₄-alkyl groups, halogens, monohalogenated or polyhalogenated C₁-C₄-alkyl groups, C₁-C₄-alkoxy groups, silyloxy groups OSiR⁷R⁸R⁹ or amino groups NR¹⁰R¹¹ as substituents,
C₁-C₄-alkoxy groups,
phenoxy,
C₁-C₄-thioether groups,
silyloxy groups OSiR⁷R⁸ R⁹,
halogens
and amino groups NR¹⁰R¹¹,
where in each case adjacent radicals R¹ to R⁴ may together form a 5- to 8-membered ring;
R⁵ and R⁶ are selected independently from among α-branched C₃-C₆-alkyl groups and C₅-C₇-cycloalkyl groups,
X is oxygen or sulfur,
Y is hydrogen or
an alkali metal cation,
a C₁-C₃-alkylacyl anion,
a benzo cation or
SiR⁷R⁸R⁹, where R⁷ to R⁹ are selected independently from among hydrogen, C₁-C₄-alkyl groups and phenyl groups;
R⁷ to R¹¹ are selected independently from among hydrogen, C₁-C₄-alkyl groups and phenyl groups, where in each case two adjacent radicals R⁷ and R⁸ or R¹⁰ and R¹¹ may together form a saturated or unsaturated 5- to 8-membered ring.

4. A metal complex as claimed in claim 1, obtainable from Ni(1,5-dicyclooctadienyl)₂
and a ligand of the formula I in which
R¹, R² and R⁴ are, independently of one another:
hydrogen,
C₁-C₄-alkyl,
benzyl,
C₅-C₇-cycloalkyl,
phenyl,
phenyl bearing one or more identical or different C₁-C₄-alkyl groups, halogens, monohalogenated or polyhalogenated C₁-C₄-alkyl groups, C₁-C₄-alkoxy groups or silyloxy groups OSiR⁷R⁸R⁹ as substituents,
C₁-C₄-alkoxy groups,
phenoxy,
C₁-C₄-thioether groups,
silyloxy groups OSiR⁷R⁸ R⁹, or
halogen;
R³ is selected from among the following groups:
α-branched C₃-C₆-alkyl groups,
C₁-C₄-alkyl bearing one or more identical or different halogens or C₁-C₄-alkoxy groups as substituents in the α position,
benzyl,
C₅-C₇-cycloalkyl,
phenyl,
phenyl bearing one or more identical or different C₁-C₄-alkyl groups, halogens, monohalogenated or polyhalogenated C₁-C₄-alkyl groups, C₁-C₄-alkoxy groups or silyloxy groups OSiR⁷R⁸R⁹ as substituents,
C₁-C₄-alkoxy groups,
phenoxy,
C₁-C₄-thioether groups,
silyloxy groups OSiR⁷R⁸ R⁹,
halogens
and amino groups NR¹⁰R¹¹,
where in each case adjacent radicals R¹ to R⁴ may together form a 5- to 8-membered ring;
R⁵ and R⁶ are selected independently from among α-branched C₃-C₆-alkyl groups and C₅-C₇-cycloalkyl groups,
R⁷ to R¹¹ are selected independently from among hydrogen, C₁-C₄-alkyl groups and phenyl groups, where in each case two adjacent radicals R⁷ and R⁸ or R¹⁰ and R¹¹ may together form a saturated or unsaturated 5- to 8-membered ring,
X is oxygen or sulfur and
Y is hydrogen.

5. A metal complex as claimed in claim 1, obtainable from
Ni(1,5-dicyclooctadienyl)₂
and a ligand of the formula Ia, 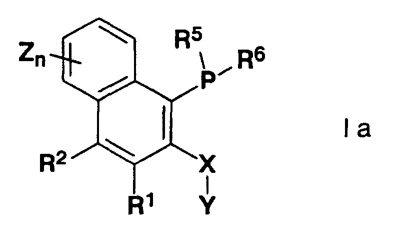 where
R¹ and R² are, independently of one another:
hydrogen,
C₁-C₄-alkyl, branched or unbranched,
benzyl,
C₅-C₇-cycloalkyl,
phenyl,
phenyl bearing one or more identical or different C₁-C₄-alkyl groups, halogens, monohalogenated or polyhalogenated C₁-C₄-alkyl groups, C₁-C₄-alkoxy groups or silyloxy groups OSiR⁷R⁸R⁹ as substituents,
C₁-C₄-alkoxy groups,
phenoxy,
C₁-C₄-thioether groups,
silyloxy groups OSiR⁷R⁸ R⁹ or
halogen;
R⁵ and R⁶ are selected independently from among α-branched C₃-C₁₂-alkyl groups and C₅-C₇-cycloalkyl groups,
R⁷ to R¹¹ are selected independently from among hydrogen, C₁-C₄-alkyl groups and phenyl groups, where in each case two adjacent radicals R⁷ to R¹¹ may together form a saturated or unsaturated 5-8-membered ring,
Z is selected from among
halogen,
C₁-C₄-alkoxy and
C₁-C₄-thioether groups;
X is oxygen or sulfur and
Y is hydrogen.

6. A catalyst for the polymerization of 1-olefins, comprising metal complexes as claimed in any of claims 1 to 5 which have been immobilized on a solid support material.

7. A catalyst for the polymerization of 1-olefins, comprising metal complexes as claimed in any of claims 1 to 5 which have been immobilized on a solid support material selected from among porous metal oxides, sheet silicates or solid halides.

8. A process for the polymerization of 1-olefins, which comprises bringing metal complexes as claimed in any of claims 1 to 5 or catalysts as claimed in claim 6 or 7 into contact with one or more 1-olefins at a pressure of 1-1000 bar and a temperature of 10-250°C.

9. A process for the polymerization of 1-olefins, which comprises bringing metal complexes as claimed in any of claims 1 to 5 or catalysts as claimed in claim 6 or 7 into contact with one or more 1-olefins at a pressure of 2-100 bar and a temperature of 40-150°C.

10. A process as claimed in claim 8 or 9, wherein the 1-olefin is ethylene.

11. A polymer of one or more 1-olefins obtainable by polymerization of one or more 1-olefins using a catalyst system as claimed in any of claims 1 to 7.

12. A molding obtainable from a polymer as claimed in claim 11 for producing films, sheets, waxes, fibers or hollow bodies.

## Revendications

1. Complexes métalliques, que l'on peut obtenir à partir d'un progéniteur métallique d'un métal du 6^{ème}-10^{ème} groupe du système périodique au degré d'oxydation 0 ou +2 et d'un ligand de la formule générale I : 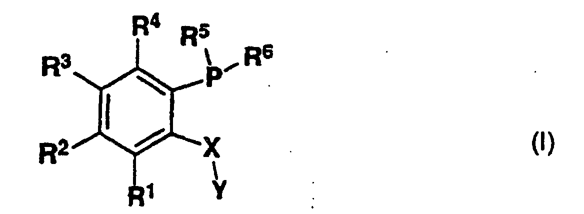 dans laquelle
R¹, R² et R⁴ représentent indépendamment l'un de l'autre :
de l'hydrogène,
un alkyle en C₁-C₁₂,
un alkyle en C₁-C₁₂, substitué de manière identique ou différente à une ou à plusieurs reprises par des groupes alkyle en C₁-C₁₂, des halogènes, des groupes alcoxy en C₁-C₁₂ ou des groupes thioéther en C₁-C₁₂,
un arylalkyle en C₇-C₂₀,
un alcényle en C₂-C₁₂,
un cycloalkyle en C₃-C₁₂,
un cycloalkyle en C₃-C₁₂, substitué de manière identique ou différente à une ou à plusieurs reprises par des groupes alkyle en C₁-C₁₂, des halogènes, des groupes alcoxy en C₁-C₁₂ ou des groupes thioéther en C₁-C₁₂,
un aryle en C₆-C₁₄,
un aryle en C₆-C₁₄, substitué de manière identique ou différente par un ou plusieurs groupes alkyle en C₁-C₁₂, des halogènes, des groupes alkyle en C₁-C₁₂ halogénés à une ou à plusieurs reprises, des groupes alcoxy en C₁-C₁₂, des groupes silyloxy, OSiR⁷R⁸R⁹, des groupes amino NR¹⁰R¹¹ ou des groupes thioéther en C₁-C₁₂,
des groupes alcoxy en C₁-C₁₂,
des groupes aryloxy en C₆-C₁₄,
des groupes thioéther en C₁-C₁₂,
des groupes silyloxy OSiR⁷R⁸R⁹,
des halogènes,
ou des groupes amino NR¹⁰R¹¹,
R³ est choisi parmi les groupes suivants :
des groupes alkyle en C₃-C₁₂ ramifiés en α,
un alkyle en C₁-C₁₂, substitué de manière identique ou différente à une ou à plusieurs reprises en position α par des groupes alkyle en C₁-C₁₂, des halogènes, des groupes alcoxy en C₁-C₁₂ ou des groupes thioéther en C₁-C₁₂,
un arylalkyle en C₇-C₂₀,
un alcényle en C₂-C₁₀,
un alcénylalkyle en C₃-C₁₀ avec au moins une double liaison, au moins une double liaison C-C étant en conjugaison avec le noyau aromatique,
un cycloalkyle en C₃-C₁₂,
un aryle en C₆-C₁₄,
un aryle en C₆-C₁₄, substitué de manière identique ou différente par un ou plusieurs groupes alkyle en C₁-C₁₂, des halogènes, des groupes alkyle en C₁-C₁₂ halogénés à une ou à plusieurs reprises, des groupes alcoxy en C₁-C₁₂, des groupes silyloxy OSiR⁷R⁸R⁹, des groupes amino NR¹⁰R¹¹ ou des groupes thioéther en C₁-C₁₂,
des groupes alcoxy en C₁-C₁₂,
des groupes aryloxy en C₆-C₁₄,
des groupes thioéther en C₁-C₁₂,
des groupes silyloxy OSiR⁷R⁸R⁹,
des halogènes,
ou des groupes amino NR¹⁰R¹¹,
des radicaux respectivement voisins R¹ à R⁴ pouvant former conjointement un noyau pentagonal à octogonal,
R⁵ et R⁶ sont choisis indépendamment l'un de l'autre parmi
des groupes alkyle en C₃-C₁₂ ramifiés en position α,
des groupes cycloalkyle en C₃-C₁₂,
des groupes cycloalkyle en C₃-C₁₂, substitués de manière identique ou différente par un ou plusieurs groupes alkyle en C₁-C₁₂, de l'halogène, des groupes alkyle en C₁-C₁₂ halogénés à une ou à plusieurs reprises, des groupes alcoxy en C₁-C₁₂, des groupes silyloxy OSiR⁷R⁸R⁹, des groupes amino NR¹⁰R¹¹ ou des groupes thioéther en C₁-C₁₂,
X représente de l'oxygène, du soufre, du sélénium, N-R¹², P-R¹² ou AsR¹²,
Y représente de l'hydrogène ou des cations de métal alcalin, des anions alkylacyliques en C₁-C₁₈, des anions arylacyliques en C₆-C₁₄ ou SiR⁷R⁸R⁹,
R⁷ à R¹² sont choisis indépendamment l'un de l'autre parmi de l'hydrogène, des groupes alkyle en C₁-C₆ ramifiés ou non ramifiés, des radicaux benzyle et des groupes aryle en C₆-C₁₄, deux radicaux voisins R⁷ et R⁸ ou R¹⁰ et R¹¹ pouvant former conjointement un noyau pentagonal à octogonal saturé ou insaturé.

2. Complexes métalliques suivant la revendication 1, que l'on peut obtenir à partir d'un progéniteur métallique d'un métal M du groupe du fer, du cobalt ou du nickel au degré d'oxydation 0 ou du palladium au degré d'oxydation 0 ou +2, dans lesquels le ou les ligands des progéniteurs métalliques sont choisis à partir du groupe des ligands suivants :
des systèmes à double liaison éthyléniquement insaturés,
des phosphanes RₓPH₃₋ₓ,
des amines RₓNH₃₋ₓ,
CO,
des nitriles,
des ions halogénure
des anions alkyliques en C₁-C₆,
des anions allyliques,
des anions benzyliques, ou
des anions aryliques,
où
R est choisi parmi de l'hydrogène, des groupes alkyle en C₁-C₆ et des groupes aryle en C₆-C₁₄,
x est un nombre entier 0, 1, 2 ou 3,
et un ligand de la formule générale I, dans laquelle
R¹, R² et R⁴ représentent indépendamment l'un de l'autre :
de l'hydrogène,
un alkyle en C₁-C₆,
un alkyle en C₁-C₆, substitué de manière identique ou différente à une ou à plusieurs reprises par des groupes alkyle en C₁-C₆, des halogènes, des groupes alcoxy en C₁-C₆ ou des groupes thioéther en C₁-C₆,
un arylalkyle en C₇-C₂₀,
un alcényle en C₂-C₆,
un cycloalkyle en C₅-C₇,
un cycloalkyle en C₅-C₇, substitué de manière identique ou différente à une ou à plusieurs reprises par des groupes alkyle en C₁-C₆, des halogènes, des groupes alcoxy en C₁-C₆ ou des groupes thioéther en C₁-C₆,
un aryle en C₆-C₁₄,
un aryle en C₆-C₁₄, substitué de manière identique ou différente par un ou plusieurs groupes alkyle en C₁-C₆, des halogènes, des groupes alkyle en C₁-C₆ halogénés à une ou à plusieurs reprises, des groupes alcoxy en C₁-C₆, des groupes silyloxy OSiR⁷R⁸R⁹, des groupes amino NR¹⁰R¹¹ ou des groupes thioéther en C₁-C₆,
des groupes alcoxy en C₁-C₆,
des groupes aryloxy en C₆-C₁₄,
des groupes thioéther en C₁-C₆,
des groupes silyloxy OSiR⁷R⁸R⁹,
des halogènes,
ou des groupes amino NR¹⁰R¹¹,
R³ est choisi parmi les groupes suivants :
des groupes alkyle en C₃-C₆ ramifiés en α,
un alkyle en C₁-C₆, substitué de manière identique ou différente à une ou à plusieurs reprises en position α par des halogènes, des groupes alcoxy en C₁-C₆ ou des groupes thioéther en C₁-C₆,
un arylalkyle en C₇-C₂₀,
un alcényle en C₂-C₁₀,
un alcénylalkyle en C₃-C₁₀ comprenant au moins une double liaison en conjugaison avec le noyau aromatique,
un cycloalkyle en C₅-C₇,
un cycloalkyle en C₅-C₇, substitué de manière identique ou différente à une ou à plusieurs reprises par des groupes alkyle en C₁-C₆, des halogènes, des groupes alcoxy en C₁-C₆ ou des groupes thioéther en C₁-C₆,
un aryle en C₆-C₁₄,
un aryle en C₆-C₁₄, substitué de manière identique ou différente par un ou plusieurs groupes alkyle en C₁-C₆, des halogènes, des groupes alkyle en C₁-C₆ halogénés à une ou à plusieurs reprises, des groupes alcoxy en C₁-C₆, des groupes silyloxy OSiR⁷R⁸R⁹, des groupes amino NR¹⁰R¹¹ ou des groupes
thioéther en C₁-C₆,
des groupes alcoxy en C₁-C₆,
des groupes aryloxy en C₆-C₁₄,
des groupes thioéther en C₁-C₆,
des groupes silyloxy OSiR⁷R⁸R⁹,
des halogènes,
ou des groupes amino NR¹⁰R¹¹,
des radicaux respectivement voisins R¹ à R⁴ pouvant former conjointement un noyau pentagonal à octogonal,
R⁵ et R⁶ sont choisis indépendamment l'un de l'autre parmi
des groupes alkyle en C₃-C₆ ramifiés en α,
des groupes cycloalkyle en C₅-C₇,
des groupes cycloalkyle en C₅-C₇, substitués de manière identique ou différente par un ou plusieurs groupes alkyle en C₁-C₁₂, de l'halogène, des groupes alkyle en C₁-C₆ halogénés à une ou à plusieurs reprises, des groupes alcoxy en C₁-C₆, des groupes silyloxy OSiR⁷R⁸R⁹, des groupes amino NR¹⁰R¹¹ ou des groupes thioéther en C₁-C₆,
des radicaux benzyle,
X représente de l'oxygène ou du soufre,
Y représente de l'hydrogène ou
des cations de métal alcalin,
des anions alkylacryliques en C₁-C₃,
des anions arylacyliques en C₆-C₁₄, ou
SiR⁷R⁸R⁹,
R⁷ à R¹¹ sont choisis indépendamment l'un de l'autre parmi de l'hydrogène, des groupes alkyle en C₁-C₆, des radicaux benzyliques et des groupes aryle en C₆-C₁₄, deux radicaux voisins R⁷ et R⁸ ou R¹⁰ et R¹¹ pouvant former conjointement un noyau pentagonal à octogonal saturé ou insaturé.

3. Complexes métalliques suivant la revendication 1, que l'on peut obtenir à partir d'un progéniteur métallique choisi parmi les composés Ni(C₂H₄)₃, Ni(1,5-cyclooctadiène)₂, Ni(1,6-cyclodécadiènes)₂, Ni(1,5,9-all-trans-cyclododécatriène)₂, Pd(norbomadiène)Cl₂, Ni[P(C₆H₅)₃]₄ et Pd[P(C₆H₅)₃]₄,
et d'un ligand de la formule générale I, dans laquelle
R¹, R² et R⁴ représentent indépendamment l'un de l'autre :
de l'hydrogène,
un alkyle en C₁-C₄,
un alkyle en C₁-C₄, substitué de manière identique ou différente à une ou à plusieurs reprises par des groupes alkyle en C₁-C₄, des halogènes, des groupes alcoxy en C₁-C₄ ou des groupes thioéther en C₁-C₄,
du benzyle,
un alcényle en C₂-C₄,
un cycloalkyle en C₅-C₇,
du phényle,
du phényle, substitué de manière identique ou différente par un ou plusieurs groupes alkyle en C₁-C₄, de l'halogène, des groupes alkyle en C₁-C₄ halogénés à une ou à plusieurs reprises, des groupes alcoxy en C₁-C₄, des groupes silyloxy OSiR⁷R⁸R⁹,
des groupes alcoxy en C₁-C₄,
du phénoxy,
des groupes thioéther en C₁-C₄,
des groupes silyloxy OSiR⁷R⁸R⁹,
de l'halogène,
ou
des groupes amino NR¹⁰R¹¹,
R³ est choisi parmi les groupes suivants :
des groupes alkyle en C₃-C₆ ramifiés en α,
un alkyle en C₁-C₄, substitué de manière identique ou différente à une ou à plusieurs
reprises en position α par des halogènes ou des groupes alcoxy en C₁-C₄,
du benzyle,
un cycloalkyle en C₅-C₇,
du phényle,
du phényle, substitué de manière identique ou différente par un ou plusieurs groupes alkyle en C₁-C₄, des halogènes, des groupes alkyle en C₁-C₄ halogénés à une ou à plusieurs reprises, des groupes alcoxy en C₁-C₄, des groupes silyloxy OSiR⁷R⁸R⁹ ou des groupes amino NR¹⁰R¹¹,
des groupes alcoxy en C₁-C₄,
du phénoxy,
des groupes thioéther en C₁-C₄,
des groupes silyloxy OSiR⁷R⁸R⁹,
des halogènes,
ou
des groupes amino NR¹⁰R¹¹,
des radicaux respectivement voisins R¹ à R⁴ pouvant former conjointement un noyau pentagonal à octogonal,
R⁵ et R⁶ sont choisis indépendamment l'un de l'autre parmi
des groupes alkyle en C₃-C₆ ramifiés en α, ou des groupes cycloalkyle en C₅-C₇,
X représente de l'oxygène ou du soufre,
Y représente de l'hydrogène ou des cations de métal alcalin, des anions alkylacyliques en C₁-C₃, des ions benzoate ou SiR⁷R⁸R⁹, où R⁷ à R⁹ sont choisis indépendamment l'un de l'autre parmi de l'hydrogène, des groupes alkyle en C₁-C₄ et des groupes phényle,
R⁷ à R¹¹ sont choisis indépendamment l'un de l'autre parmi de l'hydrogène, des groupes alkyle en C₁-C₄ et des groupes phényle, deux radicaux respectivement voisins R⁷ et R⁸ ou R¹⁰ et R¹¹ pouvant former conjointement un noyau pentagonal à octogonal saturé ou insaturé.

4. Complexes métalliques suivant la revendication 1, que l'on peut obtenir à partir
de Ni(1,5-dicyclooctadiényle)₂ et
d'un ligand de la formule générale I, dans laquelle
R¹, R² et R⁴ représentent indépendamment l'un de l'autre :
de l'hydrogène,
un alkyle en C₁-C₄,
du benzyle,
un cycloalkyle en C₅-C₇,
du phényle,
du phényle, substitué de manière identique ou différente par un ou plusieurs alkyle en C₁-C₄, de l'halogène, des groupes alkyle en C₁-C₄ halogénés à une ou à plusieurs reprises, des groupes alcoxy en C₁-C₄ ou des groupes silyloxy OSiR⁷R⁸R⁹,
des groupes alcoxy en C₁-C₄,
du phénoxy,
des groupes thioéther en C₁-C₄,
des groupes silyloxy OSiR⁷R⁸R⁹,
de l'halogène,
R³ est choisi parmi les groupes suivants :
des groupes alkyle en C₃-C₆ ramifiés en α,
un alkyle en C₁-C₄, substitué de manière identique ou différente à une ou à plusieurs reprises en position α par des halogènes ou des groupes alcoxy en C₁-C₄,
du benzyle,
un cycloalkyle en C₅-C₇,
du phényle,
du phényle, substitué de manière identique ou différente par un ou plusieurs groupes alkyle en C₁-C₄, des halogènes, des groupes alkyle en C₁-C₄ halogénés à une ou à plusieurs reprises, des groupes alcoxy en C₁-C₄ ou des groupes silyloxy OSiR⁷R⁸R⁹,
des groupes alcoxy en C₁-C₄,
du phénoxy,
des groupes thioéther en C₁-C₄,
des groupes silyloxy OSiR⁷R⁸R⁹,
des halogènes,
ou des groupes amino NR¹⁰R¹¹,
des radicaux respectivement voisins R¹ à R⁴ pouvant former conjointement un noyau pentagonal à octogonal,
R⁵ et R⁶ sont choisis indépendamment l'un de l'autre parmi des groupes alkyle en C₃-C₆ ramifiés en α, ou des groupes cycloalkyle en C₅-C₇,
R⁷ à R¹¹ sont choisis indépendamment l'un de l'autre parmi de l'hydrogène, des groupes alkyle en C₁-C₄ et des groupes phényle, deux radicaux respectivement voisins R⁷ et R⁸ ou R¹⁰ et R¹¹ pouvant former conjointement un noyau pentagonal à octogonal saturé ou insaturé,
X représente de l'oxygène ou du soufre, et
Y représente de l'hydrogène.

5. Complexes métalliques suivant la revendication 1, que l'on peut obtenir à partir
de Ni(1,5-dicyclooctadiényle)₂ et
d'un ligand de la formule générale la, 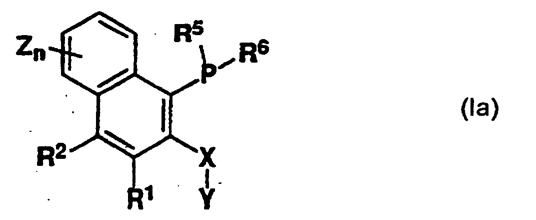 dans laquelle
R¹ et R² représentent indépendamment l'un de l'autre :
de l'hydrogène,
un alkyle en C₁-C₄, ramifié ou non ramifié,
du benzyle,
un cycloalkyle en C₅-C₇,
du phényle,
du phényle, substitué de manière identique ou différente par un ou plusieurs groupes alkyle en C₁-C₄, de l'halogène, des groupes alkyle en C₁-C₄ halogénés à une ou à plusieurs reprises, des groupes alcoxy en C₁-C₄ ou des groupes silyloxy OSiR⁷R⁸R⁹,
des groupes alcoxy en C₁-C₄,
du phénoxy,
des groupes thioéther en C₁-C₄,
des groupes silyloxy OSiR⁷R⁸R⁹,
de l'halogène,
R⁵ et R⁶ sont choisis indépendamment l'un de l'autre parmi des groupes alkyle en C₃-C₁₂ ramifiés en position α, des groupes cycloalkyle en C₅-C₇,
R⁷ à R¹¹ sont choisis indépendamment l'un de l'autre parmi de l'hydrogène, des groupes alkyle en C₁-C₄ et des groupes phényle, deux radicaux respectivement voisins R⁷ à R¹¹ pouvant former conjointement un noyau pentagonal à octogonal saturé ou insaturé,
Z est choisi parmi
de l'halogène,
un alcoxy en C₁-C₄ ou
des groupes thioéther en C₁-C₄,
X représente de l'oxygène ou du soufre, et
Y représente de l'hydrogène.

6. Catalyseur de polymérisation de 1-oléfines, contenant des complexes métalliques suivant l'une des revendications 1 à 5, qu'on a immobilisé sur une matière de support solide.

7. Catalyseur de polymérisation de 1-oléfines, contenant des complexes métalliques suivant l'une des revendications 1 à 5, qu'on a immobilisé sur une matière de support solide, cette matière de support étant choisie parmi des oxydes métalliques poreux, des silicates lamellaires ou des halogénures solides.

8. Procédé de polymérisation de 1-oléfines, **caractérisé en ce qu'**on amène en contact avec une ou plusieurs 1-oléfines des complexes métalliques suivant l'une des revendications 1 à 5 ou des catalyseurs suivant l'une des revendications 6 et 7, à une pression de 1-1000 bars et à une température de 10-250°C.

9. Procédé de polymérisation de 1-oléfines, **caractérisé en ce qu'**on met en contact avec une ou plusieurs 1-oléfines des complexes métalliques suivant l'une des revendications 1 à 5 ou des catalyseurs suivant l'une des revendications 6 et 7 à une pression de 2-100 bars et à une température de 40-150°C.

10. Procédé suivant l'une des revendications 8 et 9, **caractérisé en ce que** la 1-oléfine est de l'éthylène.

11. Polymères d'une ou de plusieurs 1-oléfines, que l'on peut obtenir par polymérisation d'une ou de plusieurs 1-oléfines avec un système catalytique suivant l'une des revendications 1 à 7.

12. Masses de façonnage, que l'on peut obtenir à partir des polymères suivant la revendication 11, pour la fabrication de feuilles, de plaques, de cires, de fibres ou de corps creux.
